# EUROPEAN PATENT APPLICATION

(11) **EP 3 093 429 A1**
(43) Date of publication of application: **16.11.2016**
(21) Application number: 15733104.2
(22) Date of filing: 04.01.2015
(51) Int. Cl.: E21C 35/00, F16J 15/16, F16J 15/32

(54) **FLOATING SEALING METHOD OF FLOATING BUSHING SEALING RECIPROCATING IMPACT APPARATUS AND FLOATING SEALING RECIPROCATING IMPACT APPARATUS OF SEALING FLOATING BUSHING OF MINING LOADER**

(30) Priority: 03.01.2014 CN 201410002116; 03.01.2014 CN 201410002095; 19.02.2014 CN 201410063151; 01.08.2014 CN 201410379376
(71) Applicant: Liu, Suhua, Shandong 272100 (CN)
(72) Inventor: Liu, Suhua, Shandong 272100 (CN)
(74) Representative: Lapienis, Juozas
(86) International application number: PCT/CN2015/070075
(87) International publication number: WO 2015/101347

(57) **Abstract**

A floating sealing method of a floating bushing sealing reciprocating impact apparatus and a floating sealing reciprocating impact apparatus of a sealing floating bushing of a mining loader, comprising a reciprocating impact box body (3), a reciprocating impact guide mechanism (1), a reciprocating impact actuating mechanism (5), a floating bushing floating sealing mechanism (2), an impact head (6) and the like. The floating bushing floating sealing mechanism comprises a floating bushing positioning seat (12), a sealing floating bushing (13), a spacer bushing outer sealing piece (10), a spacer bushing inner sealing piece (11), a floating bushing locking piece (9) and the like. The floating bushing positioning seat comprises a floating bushing positioning seat outer port (18), a floating bushing positioning seat cavity (17), a floating bushing shoulder (16) and the like. When an outer sealing end of the sealing floating bushing is arranged with a floating bushing outer end plane (19), a floating bushing inner end arc surface (20) is arranged at an inner sealing end of the sealing floating bushing, avoiding that the eccentric wear spacer bushing inner sealing piece cannot be adjusted after a floating sealing bushing tilts, and the sealing floating bushing and the like drop from the floating bushing positioning seat when shock prevention guiding elements (4) including the floating bushing locking piece, floating bushing shoulder and the like move in a reciprocating manner.

## Description

### Field of the Invention

The present invention relates to the field of machinery, and in particular to a floating sealing method of a floating bushing sealing reciprocating impact apparatus and a floating sealing reciprocating impact apparatus of a sealing floating bushing of a mining loader in the field of mining and loading machinery.

### Background of the Invention

Sealing structures used in the field of machinery at present, particularly sealing structures used by mining and loading machinery are O-shaped sealing rings, rotary shaft lip-shaped sealing rings, Y-shaped rubber sealing rings, piston high and low lip Y-shaped rubber sealing rings, piston rod high and low lip Y-shaped rubber sealing rings, bud-shaped fabric-laminated rubber sealing rings, V-shaped fabric-laminated rubber combined sealing rings, drum-shaped fabric-laminated rubber sealing rings, mountain-shaped rubber sealing rings, dustproof rubber sealing rings, felt seal oil rings and the like, the seal of the above types is only suitable for the situation that the piston movement direction is relatively stable and lateral forces applied to piston rods are small, in the case of impact of a larger lateral force, the lateral force can be only absorbed within the deformation amount per se, and no other auxiliary structure or floating sealing structure is provided to absorb the lateral impact force, a skeleton sealing ring with a traverse H-shaped section is also provided, which is characterized in that a deformation body is arranged between an outer ring and an inner ring, the widths of the outer ring and the inner ring of the seal are large and the sealing area is large, resulting in that the reciprocating resistance of the piston rod is large and a sealing piece is liable to be worn quickly, the deformation body between an inner sealing ring and an outer sealing ring of the sealing piece is too soft, so that the inner ring leaning against the piston rod reciprocates with the piston rod, resulting in tear of the deformation body, if the deformation body is too hard, the deformation body cannot play the floating sealing function, in the case of the impact of the larger lateral force, only the deformation body between the inner sealing ring and the outer sealing ring of the sealing piece absorbs the impact lateral force, and no other auxiliary structure or floating sealing structure is provided to absorb the lateral impact force, therefore when a mining loader impacts a material, the above sealing piece is damaged within a very short time due to the shear, friction and extrusion and the like of the relatively large lateral force, resulting in serious leakage of lubricating oil or a lubricant and the like in a reciprocating impact box body, and even resulting in that the entire system cannot work and the environment is polluted seriously, therefore the sealing piece must be changed frequently, the weight of an impact head is 200-800kg, the disassembly site conditions are poorer and the necessary disassembly and change time is long, so that the efficiency of the reciprocating impact mining loader is low, the cost is high, and the production schedule is influenced seriously. In order to solve the above problems, the present invention provides a floating sealing method of a floating bushing sealing reciprocating impact apparatus and a floating sealing reciprocating impact apparatus of a sealing floating bushing of a mining loader.

### Summary of the Invention

The present invention is implemented by the following technical solutions: a floating sealing reciprocating impact apparatus of a sealing floating bushing of a mining loader includes a reciprocating impact box body, a reciprocating impact guide mechanism, a reciprocating impact actuating mechanism, a floating bushing floating sealing mechanism, an impact head and the like, the floating bushing floating sealing mechanism includes a floating bushing positioning seat, a sealing floating bushing, a spacer bushing outer sealing piece, a spacer bushing inner sealing piece and a floating bushing locking piece and the like, the floating bushing positioning seat includes a floating bushing positioning seat outer port, a floating bushing positioning seat cavity and a floating bushing shoulder and the like, an end part of the sealing floating bushing includes a floating adjustment surface and the like, the floating adjustment surface includes a plane, an arc surface, an inclined plane, a conical surface or a curved surface and the like, when an outer sealing end of the sealing floating bushing is provided with a floating bushing outer end plane, a floating bushing inner end arc surface is arranged at an inner sealing end of the sealing floating bushing, or when the outer sealing end of the sealing floating bushing is provided with a floating bushing outer end arc surface, a floating bushing inner end plane is arranged at the inner sealing end of the sealing floating bushing, or when the outer sealing end of the sealing floating bushing is provided with a floating bushing outer end arc surface, a floating bushing inner end arc surface is arranged at the inner sealing end of the sealing floating bushing, or when the outer sealing end of the sealing floating bushing is provided with a floating bushing outer end plane, a floating bushing inner end plane is arranged at the inner sealing end of the sealing floating bushing, or when the outer sealing end of the sealing floating bushing is provided with a floating bushing outer end inclined plane, a floating bushing inner end plane is arranged at the inner sealing end of the sealing floating bushing, or when the outer sealing end of the sealing floating bushing is provided with a floating bushing outer end plane, a floating bushing inner end conical surface is arranged at the inner sealing end of the sealing floating bushing, or when the outer sealing end of the sealing floating bushing is provided with a floating bushing outer end plane, a floating bushing inner end curved surface is arranged at the inner sealing end of the sealing floating bushing, and the like, more than one spacer bushing outer sealing piece is arranged on the outer side of the sealing floating bushing, more than one spacer bushing inner sealing piece is arranged on the inner side of the sealing floating bushing, the floating bushing positioning seat outer port, the floating bushing positioning seat cavity and the floating bushing shoulder are separately connected or integrated, a sealing floating bushing locking piece hole slot is arranged at the floating bushing positioning seat outer port, the floating bushing positioning seat is arranged on the reciprocating impact box body, the floating bushing positioning seat and the reciprocating impact box body are separately connected or integrated, the reciprocating impact guide mechanism includes an impact guide piece and a guide rod connecting piece and the like, the guide rod connecting piece is arranged in the reciprocating impact box body, the guide rod connecting piece and the impact guide piece are separately connected or integrated, one end or both ends of the impact guide piece stretch out from the reciprocating impact box body, the sealing floating bushing, the spacer bushing outer sealing piece and the spacer bushing inner sealing piece are arranged in the floating bushing positioning seat cavity, the sealing floating bushing snap-fits the spacer bushing outer sealing piece between the outer side of the sealing floating bushing and the floating bushing positioning seat, the impact guide piece penetrates through the spacer bushing inner sealing piece, the spacer bushing inner sealing piece is arranged among the floating bushing shoulder, the sealing floating bushing and the impact guide piece and/or is arranged between the inner side of the sealing floating bushing and the impact guide piece, the floating bushing locking piece is arranged in the sealing floating bushing locking piece hole slot, when the floating bushing outer end plane is attached to the floating bushing locking piece, the floating bushing inner end arc surface leans against the floating bushing shoulder, or when the floating bushing outer end arc surface leans against the floating bushing locking piece, the floating bushing inner end plane is attached to the floating bushing shoulder, thus allowing the floating bushing shoulder to prevent the sealing floating bushing from dropping from one side of the floating bushing shoulder, and allowing the floating bushing locking piece to prevent the sealing floating bushing from dropping from the floating bushing positioning seat outer port, the impact head is arranged at one end or both ends of the impact guide piece, the impact head and the impact guide piece are separately connected or integrated, the reciprocating impact actuating mechanism includes a power driving piece and the like, the power driving piece drives the guide rod connecting piece to drive the impact guide piece to carry out reciprocating impact, the impact head at the end part of the impact guide piece impacts a coal wall or a stone wall or concrete or ore rock and the like, a huge lateral force and/or reactive force is applied to the impact guide piece, the impact guide piece impacts the spacer bushing inner sealing piece, the spacer bushing inner sealing piece drives the sealing floating bushing to float, the sealing floating bushing pushes and extrudes the floating bushing locking piece, the spacer bushing outer sealing piece and/or the floating bushing shoulder and the like and floats, the floating bushing locking piece swings, the spacer bushing outer sealing piece deforms to absorb the lateral force and/or the reactive force and the like, the sealing floating bushing, the spacer bushing inner sealing piece and the spacer bushing outer sealing piece float and seal in the floating bushing positioning seat to prevent the impact guide piece from damaging the spacer bushing inner sealing piece, the spacer bushing outer sealing piece and/or the sealing floating bushing and the like, the spacer bushing outer sealing piece, the spacer bushing inner sealing piece, the floating bushing locking piece, the floating bushing inner end arc surface, the floating bushing outer end plane and the floating bushing shoulder and the like cooperate to correct the sealing floating bushing, thus allowing the sealing floating bushing to be corrected while floating and sealing, and avoiding that the eccentric wear spacer bushing inner sealing piece cannot be adjusted after the floating sealing bushing tilts, the spacer bushing outer sealing piece and the sealing floating bushing are separately combined or integrated, or the spacer bushing outer sealing piece and the floating bushing positioning seat are separately connected or integrated and the like, the floating bushing locking piece and the floating bushing shoulder prevent the impact guide piece from dropping the sealing floating bushing, the spacer bushing outer sealing piece and the spacer bushing inner sealing piece and the like from the floating bushing positioning seat in a reciprocating process.

The present invention further includes the following methods:
First method:
   a first step: arranging a sealing floating bushing and the like, arranging a floating adjustment surface and the like at the end part of the sealing floating bushing, forming the floating adjustment surface into a plane, an arc surface, an inclined plane, a conical surface or a curved surface and the like, when forming an outer sealing end of the sealing floating bushing into a floating bushing outer end plane, arranging a floating bushing inner end arc surface at an inner sealing end of the sealing floating bushing, or when forming the outer sealing end of the sealing floating bushing into a floating bushing outer end arc surface, arranging a floating bushing inner end plane at the inner sealing end of the sealing floating bushing, or when forming the outer sealing end of the sealing floating bushing into a floating bushing outer end arc surface, arranging a floating bushing inner end arc surface at the inner sealing end of the sealing floating bushing, or when forming the outer sealing end of the sealing floating bushing into a floating bushing outer end plane, arranging a floating bushing inner end plane at the inner sealing end of the sealing floating bushing, or when forming the outer sealing end of the sealing floating bushing into a floating bushing outer end inclined plane, arranging a floating bushing inner end plane at the inner sealing end of the sealing floating bushing, or when forming the outer sealing end of the sealing floating bushing into a floating bushing outer end plane, arranging a floating bushing inner end conical surface at the inner sealing end of the sealing floating bushing, or when forming the outer sealing end of the sealing floating bushing into a floating bushing outer end plane, arranging a floating bushing inner end curved surface at the inner sealing end of the sealing floating bushing, and the like;
   a second step: arranging a spacer bushing outer sealing piece, a spacer bushing inner sealing piece and the like, arranging more than one spacer bushing outer sealing piece on the outer side of the sealing floating bushing, and arranging more than one spacer bushing inner sealing piece on the inner side of the sealing floating bushing, and the like;
   a third step: arranging a floating bushing positioning seat outer port, a floating bushing positioning seat cavity and a floating bushing shoulder and the like to form a floating bushing positioning seat, separately connecting or integrally arranging the floating bushing positioning seat outer port, the floating bushing positioning seat cavity and the floating bushing shoulder, and arranging a sealing floating bushing locking piece hole slot at the floating bushing positioning seat outer port;
   a fourth step: arranging a reciprocating impact box body, and arranging the floating bushing positioning seat on the reciprocating impact box body, wherein the floating bushing positioning seat and the reciprocating impact box body are separately connected or integrated; a fifth step: arranging a impact guide piece and a guide rod connecting piece, arranging the guide rod connecting piece in the reciprocating impact box body, and separately connecting or integrating the guide rod connecting piece and the impact guide piece;
   a sixth step: pushing the spacer bushing outer sealing piece, the spacer bushing inner sealing piece and the sealing floating bushing into the floating bushing positioning seat cavity from the floating bushing positioning seat outer port, snap-fitting the spacer bushing outer sealing piece between the outer side of the sealing floating bushing and the floating bushing positioning seat by the sealing floating bushing, penetrating the impact guide piece through the spacer bushing inner sealing piece, arranging the spacer bushing inner sealing piece among the floating bushing shoulder, the sealing floating bushing and the impact guide piece and/or between the inner side of the sealing floating bushing and the impact guide piece, and the like;
   a seventh step: arranging a floating bushing locking piece and the like, arranging the floating bushing locking piece in the sealing floating bushing locking piece hole slot, when the floating bushing outer end plane is attached to the floating bushing locking piece, leaning the floating bushing inner end arc surface against the floating bushing shoulder, or when the floating bushing outer end arc surface leans against the floating bushing locking piece, attaching the floating bushing inner end plane to the floating bushing shoulder, thus allowing the floating bushing shoulder to prevent the sealing floating bushing from dropping from one side of the floating bushing shoulder, and allowing the floating bushing locking piece to prevent the sealing floating bushing from dropping from the floating bushing positioning seat outer port;
   an eighth step: arranging the impact head and the like, arranging the impact head at one end or both ends of the impact guide piece, and separately connecting or integrating the impact head and the impact guide piece; and
   a ninth step: arranging a power driving piece and the like, and making the power driving piece drive the guide rod connecting piece to drive the impact guide piece to carry out reciprocating impact, wherein the impact head arranged at the end part of the impact guide piece impacts a coal wall or a stone wall or concrete or ore rock and the like, due to the hardness of the coal wall or the stone wall or the concrete or the ore rock and the like, the impact head generates a huge lateral force and/or reactive force and the like, the huge lateral force and/or reactive force and the like drive the impact guide piece to impact the spacer bushing inner sealing piece, the spacer bushing inner sealing piece drives the sealing floating bushing to float, the sealing floating bushing pushes and extrudes the floating bushing locking piece, the spacer bushing outer sealing piece and/or the floating bushing shoulder and the like and floats, the floating bushing locking piece swings, the spacer bushing outer sealing piece deforms to absorb the lateral force and/or the reactive force, the sealing floating bushing, the spacer bushing inner sealing piece and the spacer bushing outer sealing piece float and seal in the floating bushing positioning seat to prevent the impact guide piece from damaging the spacer bushing inner sealing piece, the spacer bushing outer sealing piece and/or the sealing floating bushing and the like, the spacer bushing outer sealing piece, the spacer bushing inner sealing piece, the floating bushing locking piece, the floating bushing inner end arc surface, the floating bushing outer end plane and the floating bushing shoulder cooperate to correct the sealing floating bushing, thus allowing the sealing floating bushing to be corrected while floating and sealing, and avoiding that the eccentric wear spacer bushing inner sealing piece cannot be adjusted after the floating sealing bushing tilts.
Second method:
   a first step: forming the floating bushing locking piece into a snap spring or an elastic pin or a locking pin or a taper pin or an expansion pin or a retainer ring or a spacer bushing or a steel wire or a rope and the like, and singly using or cooperatively using the snap spring, the elastic pin, the locking pin, the taper pin, the expansion pin, the retainer ring, the spacer bushing, the steel wire and the rope and the like;
   a second step: when the snap spring is singly used, directly attaching the snap spring to the sealing floating bushing, and when the snap spring is cooperatively used with the retainer ring, arranging the snap spring on one side of the retainer ring, and arranging the sealing floating bushing on the other side of the retainer ring;
   a third step: arranging the floating bushing outer end arc surface for rotating relative to the floating bushing locking piece of the sealing floating bushing on the sealing floating bushing at the joint of the sealing floating bushing and the floating bushing locking piece, and/or arranging the floating bushing inner end arc surface for rotating relative to the floating bushing shoulder of the sealing floating bushing on the sealing floating bushing at the joint of the sealing floating bushing and the floating bushing shoulder;
   a fourth step: forming an end close to the sealing floating bushing of the retainer ring into a plane, an arc surface, an inclined plane, a conical surface or a curved surface and the like, when the floating bushing inner end arc surface is close to the floating bushing shoulder, forming the end close to the sealing floating bushing of the retainer ring into a retainer ring inner side plane, and attaching the retainer ring inner side plane to the floating bushing outer end plane;
   a fifth step: forming a joint of the outer side of the retainer ring and the floating bushing positioning seat into an retainer ring outer arc surface or an retainer ring outer cylindrical surface or a retainer ring outer plane and the like; and
   a sixth step: leaning the retainer ring against the snap spring, wherein when the impact head generates the huge lateral force and/or reactive force to be applied to the impact guide piece, the impact guide piece impacts the spacer bushing inner sealing piece, the spacer bushing inner sealing piece drives the sealing floating bushing to float, the sealing floating bushing pushes and extrudes the retainer ring, the retainer ring outer arc surface rotates relative to the floating bushing positioning seat to push and extrude the snap spring, so as to drive the snap spring to swing, the sealing floating bushing pushes and extrudes the spacer bushing outer sealing piece, the spacer bushing outer sealing piece deforms to absorb the lateral force and/or the reactive force, the snap spring, the retainer ring, the spacer bushing outer sealing piece, the spacer bushing inner sealing piece, the floating bushing inner end arc surface, the floating bushing outer end plane and the like cooperate with the floating bushing shoulder to correct the sealing floating bushing, thus allowing the sealing floating bushing to be corrected while floating and sealing, and avoiding that the eccentric wear spacer bushing inner sealing piece cannot be adjusted after the floating sealing bushing tilts.

The floating bushing locking piece includes a snap spring or an elastic pin or a locking pin or a taper pin or an expansion pin or a retainer ring or a spacer bushing or a steel wire or a rope and the like, the snap spring, the elastic pin, the locking pin, the taper pin, the expansion pin, the retainer ring, the spacer bushing, the steel wire and the rope and the like are singly used or cooperatively used, when the snap spring is singly used, the snap spring is directly attached to the sealing floating bushing, and when the snap spring is cooperatively used with the retainer ring, the snap spring is arranged on one side of the retainer ring, the sealing floating bushing is arranged on the other side of the retainer ring, the floating bushing outer end arc surface for rotating relative to the floating bushing locking piece of the sealing floating bushing is arranged on the sealing floating bushing at the joint of the sealing floating bushing and the floating bushing locking piece, and/or the floating bushing inner end arc surface for rotating relative to the floating bushing shoulder of the sealing floating bushing is arranged on the sealing floating bushing at the joint of the sealing floating bushing and the floating bushing shoulder, an end close to the sealing floating bushing of the retainer ring is provided with a plane, an arc surface, an inclined plane, a conical surface or a curved surface and the like, when the floating bushing inner end arc surface is close to the floating bushing shoulder, the end close to the sealing floating bushing of the retainer ring is provided with a retainer ring inner side plane, the retainer ring inner side plane is attached to the floating bushing outer end plane, a joint of the outer side of the retainer ring and the floating bushing positioning seat is formed into an retainer ring outer arc surface or an retainer ring outer cylindrical surface or a retainer ring outer plane and the like, the retainer ring leans against the snap spring, when the impact head generates the huge lateral force and/or reactive force and the like to be applied to the impact guide piece, the impact guide piece impacts the spacer bushing inner sealing piece, the spacer bushing inner sealing piece drives the sealing floating bushing to float, the sealing floating bushing pushes and extrudes the retainer ring, the retainer ring outer arc surface rotates relative to the floating bushing positioning seat to push and extrude the snap spring, the snap spring swings, the sealing floating bushing pushes and extrudes the spacer bushing outer sealing piece, the spacer bushing outer sealing piece deforms to absorb the lateral force and/or the reactive force, the snap spring, the retainer ring, the spacer bushing outer sealing piece, the spacer bushing inner sealing piece, the floating bushing inner end arc surface, the floating bushing outer end plane and the like cooperate with the floating bushing shoulder to correct the sealing floating bushing, thus allowing the sealing floating bushing to be corrected while floating and sealing, and avoiding that the eccentric wear spacer bushing inner sealing piece cannot be adjusted after the floating sealing bushing tilts.

The sealing floating bushing includes an outer side groove of the sealing floating bushing and/or an outer side cylindrical surface of the sealing floating bushing and the like, a spacer bushing inner sealing piece groove is formed on the inner side of the sealing floating bushing, the spacer bushing outer sealing piece is arranged in the outer side groove of the sealing floating bushing and/or the spacer bushing outer sealing piece is arranged on the outer side cylindrical surface of the sealing floating bushing, and the spacer bushing inner sealing piece is arranged in the spacer bushing inner sealing piece groove and/or the spacer bushing inner sealing piece is arranged between the sealing floating bushing and the floating bushing shoulder.

The sealing floating bushing further includes a left sealing floating spacer bushing and a right sealing floating spacer bushing and the like, the left sealing floating spacer bushing and the right sealing floating spacer bushing are separately connected or integrated, the spacer bushing inner sealing piece includes a left spacer bushing inner sealing piece and/or a right spacer bushing inner sealing piece and the like, the spacer bushing outer sealing piece includes a left spacer bushing outer sealing piece and/or a right spacer bushing outer sealing piece and the like, the left spacer bushing outer sealing piece is arranged on the outer side of the left sealing floating spacer bushing and/or the right spacer bushing outer sealing piece is arranged on the outer side of the right sealing floating spacer bushing, and the left spacer bushing inner sealing piece is arranged on the inner side of the left sealing floating spacer bushing and/or the right spacer bushing inner sealing piece is arranged on the inner side of the right sealing floating spacer bushing.

The sealing floating bushing includes a lifting lug, a disassembly groove or a jackscrew structure and the like, the lifting lug, the disassembly groove or a jackscrew hole and the like are arranged in the sealing floating bushing, and the sealing floating bushing is taken out from the floating bushing positioning seat through the lifting lug, the disassembly groove or the jackscrew structure and the like.

The jackscrew structure includes the jackscrew hole and a floating bushing jackscrew rod and the like, when the spacer bushing inner sealing piece, the spacer bushing outer sealing piece and the like are damaged and need to be changed, the floating bushing locking piece is taken out from the floating bushing positioning seat, the floating bushing jackscrew rod is arranged in the jackscrew hole, and the floating bushing jackscrew rod is rotated to take out the sealing floating bushing from the floating bushing positioning seat.

The jackscrew structure includes the jackscrew hole, the floating bushing jackscrew rod, a jackscrew rod nut and a supporting nut piece and the like, the supporting nut piece includes a jackscrew rod hole and the like, when the spacer bushing inner sealing piece, the spacer bushing outer sealing piece and the like are damaged and need to be changed, the floating bushing jackscrew rod is screwed into the jackscrew hole by penetrating through the jackscrew rod hole, the jackscrew rod nut is arranged on the floating bushing jackscrew rod, the jackscrew rod nut is rotated to support the jackscrew rod nut by the supporting nut piece, and the floating bushing jackscrew rod and the sealing floating bushing are taken out from the floating bushing positioning seat by the jackscrew rod nut.

The spacer bushing outer sealing piece includes an open spacer bushing outer sealing piece and/or the spacer bushing inner sealing piece includes an open spacer bushing inner sealing piece and the like, the open spacer bushing inner sealing piece includes an open dustproof sealing piece and/or an open anti-leakage sealing piece and the like, when the spacer bushing inner sealing piece, the spacer bushing outer sealing piece and the like are damaged and need to be changed, the damaged spacer bushing inner sealing piece and spacer bushing outer sealing piece are changed by the open spacer bushing outer sealing piece and the open spacer bushing inner sealing piece, open ends of the open spacer bushing outer sealing piece and the open spacer bushing inner sealing piece are placed at the upper part of the sealing floating bushing, and the open end of the open spacer bushing outer sealing piece is fastened to, or fritted to, or bonded to or inserted into, or connected in other manners to the open end of the open spacer bushing inner sealing piece.

The reciprocating impact box body includes a power box, a guide box and a partition board and the like, the impact guide piece is arranged in the guide box, the partition board is arranged between the power box and the guide box, the floating bushing positioning seat includes a guide box floating bushing positioning seat and/or a power box floating bushing positioning seat and the like, the sealing floating bushing includes a guide box sealing floating bushing and/or a power box sealing floating bushing and the like, the power box floating bushing positioning seat is arranged on the partition board, the power box sealing floating bushing is arranged in the power box floating bushing positioning seat, the impact guide piece further includes a guide rod and the like, a movement sealing plug or a movement sealing jacket and the like are arranged on the guide rod connecting piece, the power box sealing floating bushing cooperates with the movement sealing plug or the movement sealing jacket and the like for sealing and preventing liquid, materials or dust and the like from entering the guide box from the power box, the guide box floating bushing positioning seat and the like are arranged at the cooperation site of the guide rod and the guide box, the guide box sealing floating bushing and the like are arranged in the guide box floating bushing positioning seat, the movement sealing plug or the movement sealing jacket includes a sealing column and the like, the sealing column cooperates with the power box sealing floating bushing for sealing, the movement sealing plug or the movement sealing jacket and the guide rod connecting piece are separately connected or integrated, the floating bushing locking piece prevents the sealing floating bushing from dropping from the partition board floating bushing positioning seat, and/or the floating bushing locking piece prevents the sealing floating bushing from dropping from the interior of the guide box floating bushing positioning seat.

The sealing floating bushing includes a rubber sealing floating bushing, a metal sealing floating bushing or a plastic sealing floating bushing or a wood sealing floating bushing and the like.

The floating bushing locking piece includes a floating bushing protection retainer ring and the like, and the floating bushing protection retainer ring includes a rubber floating bushing retainer ring, a metal floating bushing protection retainer ring or a plastic floating bushing protection retainer ring or a wood floating bushing protection retainer ring and the like.

The spacer bushing inner sealing piece includes a dustproof spacer bushing inner sealing piece and/or an anti-leakage spacer bushing inner sealing piece and the like, the dustproof spacer bushing inner sealing piece is arranged at a position close to the impact head on the sealing floating bushing, and the anti-leakage spacer bushing inner sealing piece is arranged at a position close to the guide rod connecting piece on the sealing floating bushing.

The snap spring includes a hole elastic retainer ring or an outer arc surface snap spring and the like, a hole elastic retainer ring groove and the like are formed on the floating bushing positioning seat, the hole elastic retainer ring is placed in the hole elastic retainer ring groove, or an outer arc surface snap spring deformation groove is formed in the floating bushing positioning seat, an outer arc surface snap spring deformation groove matched with an outer arc surface snap spring groove of the floating bushing positioning seat is formed on the floating bushing protection retainer ring, the outer arc surface snap spring is arranged on the outer arc surface snap spring deformation groove, the sealing floating bushing is pushed into the floating bushing positioning seat, a hole wall of the floating bushing positioning seat compresses the outer arc surface snap spring into the outer arc surface snap spring deformation groove, when the outer arc surface snap spring is pushed to the position of the outer arc surface snap spring groove of the floating bushing positioning seat, the outer arc surface snap spring elastically stretches into the outer arc surface snap spring groove of the floating bushing positioning seat outwards, the floating bushing protection retainer ring is snap-fitted with the floating bushing positioning seat, the outer arc surface snap spring prevents the floating bushing protection retainer ring from dropping from the floating bushing positioning seat, during disassembly, the retainer ring is pried and pulled at a force larger than the deformation force of the outer arc surface snap spring, the floating bushing protection retainer ring moves outwards from the floating bushing positioning seat to push the outer arc surface snap spring into the outer arc surface snap spring deformation groove and pull out the floating bushing protection retainer ring from the floating bushing positioning seat, the height of the arc surface of the outer arc surface snap spring groove is smaller than the radius of the outer arc surface of the outer arc surface snap spring, and the radius of the arc surface of the outer arc surface snap spring groove is larger than or equal to the radius of the outer arc surface of the outer arc surface snap spring.

The end leaning against the sealing floating bushing of the floating bushing shoulder includes a plane, an arc surface, an inclined plane, a conical surface or a curved surface and the like.

An inner side wall of the floating bushing positioning seat cavity includes a plane or a concave surface or a convex surface and the like, the spacer bushing outer sealing piece is arranged in the concave surface of the floating bushing positioning seat cavity, and the concave surface prevents the spacer bushing outer sealing piece from being displaced.

The present invention has the following beneficial effects:
The floating sealing method of the floating bushing sealing reciprocating impact apparatus and the floating sealing reciprocating impact apparatus of the sealing floating bushing of the mining loader have the following advantages:
   (1) when the outer sealing end of the sealing floating bushing is formed into the floating bushing outer end plane, the floating bushing inner end arc surface is arranged at the inner sealing end of the sealing floating bushing, or when the outer sealing end of the sealing floating bushing is formed into the floating bushing outer end arc surface, the floating bushing inner end plane is arranged at the inner sealing end of the sealing floating bushing, more than one spacer bushing outer sealing piece is arranged on the outer side of the sealing floating bushing, more than one spacer bushing inner sealing piece is arranged on the inner side of the sealing floating bushing, the sealing floating bushing snap-fits the spacer bushing outer sealing piece between the outer side of the sealing floating bushing and the floating bushing positioning seat, the floating bushing locking piece is arranged in the sealing floating bushing locking piece hole slot, when the floating bushing outer end plane is attached to the floating bushing locking piece, the floating bushing inner end arc surface leans against the floating bushing shoulder, thus allowing the floating bushing shoulder to prevent the sealing floating bushing from dropping from one side of the floating bushing shoulder, and allowing the floating bushing locking piece to prevent the sealing floating bushing from dropping from the floating bushing positioning seat outer port, the power driving piece drives the guide rod connecting piece to drive the impact guide piece to carry out reciprocating impact, the coal wall or the stone wall or the concrete or the ore rock and the like which are hard make the impact head generate the huge lateral force and/or reactive force and the like to be applied to the impact guide piece, the impact guide piece impacts the spacer bushing inner sealing piece, the spacer bushing inner sealing piece drives the sealing floating bushing to float, the sealing floating bushing pushes and extrudes the floating bushing locking piece, the spacer bushing outer sealing piece and/or the floating bushing shoulder and the like and floats, the floating bushing locking piece swings, the spacer bushing outer sealing piece deforms to absorb the lateral force and/or the reactive force, the sealing floating bushing, the spacer bushing inner sealing piece and the spacer bushing outer sealing piece float and seal in the floating bushing positioning seat to prevent the impact guide piece from damaging the spacer bushing inner sealing piece, the spacer bushing outer sealing piece and/or the sealing floating bushing and the like, the floating bushing locking piece, the spacer bushing outer sealing piece, the spacer bushing inner sealing piece, the floating bushing inner end arc surface, the floating bushing outer end plane and the floating bushing shoulder cooperate to correct the sealing floating bushing and the like, thus allowing the sealing floating bushing to be corrected while floating and sealing, and avoiding that the eccentric wear spacer bushing inner sealing piece cannot be adjusted after the floating sealing bushing tilts, the sealing property of the reciprocating impact apparatus is improved, the reciprocating impact apparatus can adapt to such hard working conditions as impacting rocks, mines, concrete and the like, and the reciprocating impact apparatus is long in service life and low in maintenance cost, the sealing floating bushing is suitable for severe environments with large rainfall and much dust, and the sealing property of the reciprocating impact box body damaged by the huge lateral force of the reciprocating impact mining machine is further improved.
   (2) When the snap spring is singly used, the snap spring is directly attached to the sealing floating bushing, when the snap spring is cooperatively used with the retainer ring, the snap spring is arranged on one side of the retainer ring, the sealing floating bushing is arranged on the other side of the retainer ring, the end close to the sealing floating bushing of the retainer ring is formed into the retainer ring inner side plane, the retainer ring inner side plane is attached to the floating bushing outer end plane, the floating bushing inner end arc surface is close to the floating bushing shoulder, the retainer ring leans against the snap spring, when the impact head generates the huge lateral force and/or reactive force to be applied to the impact guide piece, the impact guide piece impacts the spacer bushing inner sealing piece, the spacer bushing inner sealing piece drives the sealing floating bushing to float, the sealing floating bushing pushes and extrudes the retainer ring, the retainer ring outer arc surface rotates relative to the floating bushing positioning seat to push and extrude the snap spring, the snap spring swings, the sealing floating bushing pushes and extrudes the spacer bushing outer sealing piece, the spacer bushing outer sealing piece deforms to absorb the lateral force and/or the reactive force, the snap spring, the retainer ring, the spacer bushing outer sealing piece, the spacer bushing inner sealing piece, the floating bushing inner end arc surface, the floating bushing outer end plane, the floating bushing shoulder and the like cooperate to correct the sealing floating bushing, thus allowing the sealing floating bushing to be corrected while floating and sealing, and avoiding that the eccentric wear spacer bushing inner sealing piece cannot be adjusted after the floating sealing bushing tilts, the retainer ring cooperates with the snap spring to improve the correction area and the locking strength of the floating bushing locking piece on the floating sealing bushing, and the retainer ring effectively protects the floating sealing bushing.
   (3) The spacer bushing outer sealing piece is arranged in the outer side groove of the sealing floating bushing, and the spacer bushing inner sealing piece is arranged in the spacer bushing inner sealing piece groove and/or the spacer bushing inner sealing piece is arranged between the sealing floating bushing and the floating bushing shoulder, thereby ensuring the optimal positions of the spacer bushing inner sealing piece and the spacer bushing outer sealing piece and effectively preventing blockage of the sealing floating bushing due to the displacement of the sealing pieces and other problems.
   (4) The left spacer bushing outer sealing piece is arranged on the outer side of the left sealing floating spacer bushing and/or the right spacer bushing outer sealing piece is arranged on the outer side of the right sealing floating spacer bushing, the left spacer bushing inner sealing piece is arranged on the inner side of the left sealing floating spacer bushing and/or the right spacer bushing inner sealing piece is arranged on the inner side of the right sealing floating spacer bushing, the left spacer bushing inner sealing piece and the right spacer bushing inner sealing piece cooperate with the left spacer bushing outer sealing piece and the right spacer bushing outer sealing piece to buffer, support and correct the position of the sealing floating bushing on multiple points, so as to reinforce the sealing strength.
   (5) The lifting lug, the disassembly groove or the jackscrew hole and the like are arranged in the sealing floating bushing, when the spacer bushing inner sealing piece and the spacer bushing outer sealing piece are damaged and need to be changed, the floating bushing locking piece is taken out from the floating bushing positioning seat, the floating bushing jackscrew rod is arranged in the jackscrew hole, and the sealing floating bushing is taken out from the floating bushing positioning seat through the floating bushing jackscrew rod, the jackscrew hole and the like, the spacer bushing inner sealing piece is installed in the inner ring of the sealing floating bushing, the spacer bushing outer sealing piece is installed in the outer ring of the sealing floating bushing, the sealing floating bushing is pushed into the floating bushing positioning seat, the structure is simple, the operation is easy and the maintenance efficiency is improved.
   (6) When the spacer bushing inner sealing piece and the spacer bushing outer sealing piece are damaged and need to be changed, the floating bushing jackscrew rod is rotated into the jackscrew hole by penetrating through the jackscrew rod hole, the jackscrew rod nut is arranged on the floating bushing jackscrew rod, the jackscrew rod nut is rotated to support the jackscrew rod nut by the supporting nut piece, and the floating bushing jackscrew rod and the sealing floating bushing are taken out from the floating bushing positioning seat by the jackscrew rod nut under the support of the supporting nut piece, the structure takes out the sealing floating bushing via the cooperation of the jackscrew rod nut and the supporting nut piece, thereby being simple in structure, time-saving, labor-saving, efficient, etc.
   (7) The open ends of the open spacer bushing outer sealing piece and the open spacer bushing inner sealing piece are placed at the upper part of the sealing floating bushing, the open end of the open spacer bushing outer sealing piece is fastened to, or fritted to, or bonded to or inserted into, or connected in other manners to the open end of the open spacer bushing inner sealing piece, the spacer bushing inner sealing piece and/or the spacer bushing outer sealing piece is changed without detaching the impact head or the impact guide piece, and the open ends are fixed and sealed by fastening, fritting, bonding or inserting or in other connecting modes, so that the labor intensity and the workload of detaching the impact head with a weight of several hundreds of kilograms to change the sealing pieces are greatly reduced, and the change is convenient and efficient.
   (8) The impact guide piece is arranged in the guide box, the partition board is arranged between the power box and the guide box, the power box floating bushing positioning seat is arranged on the partition board, the power box sealing floating bushing is arranged in the power box floating bushing positioning seat, the power box sealing floating bushing cooperates with the movement sealing plug or the movement sealing jacket for sealing and preventing liquid, materials, dust and the like from entering the guide box from the power box, the guide box sealing floating bushing is arranged in the guide box floating bushing positioning seat, the sealing column cooperates with the power box sealing floating bushing for sealing, so that the lubricant, the lubricating oil and the like in the guide box cannot entirely flow into the power box or flow into the guide box and the like due to the upward impact or the downward impact of the reciprocating impact apparatus, and thus both of the impact guide piece and the power driving piece are well lubricated.
   (9) The high-strength plastic floating bushing protection retainer ring can be used for avoiding disassembly difficulty and other problems due to the corrosion of the retainer ring.
   (10) The sealing floating bushing adopts the metal sealing floating bushing or the plastic sealing floating bushing to reinforce the rigidity of the sealing floating bushing, the reduction of the sealing floating effect due to the deformation of the sealing floating bushing can be prevented, and the sealing floating bushing can also be prevented from dropping from the floating bushing positioning seat due to deformation.
   (11) The dustproof sealing piece is arranged at the position close to the impact head on the sealing floating bushing, the anti-leakage sealing piece is arranged at the position close to the guide rod connecting piece on the sealing floating bushing, the dustproof sealing piece and the anti-leakage sealing piece are arranged on the same sealing floating bushing to reduce the probability of the materials, the liquid, the dust and the like of entering the reciprocating impact box body, prevent the lubricating liquid in the reciprocating impact box body from leaking from the reciprocating impact box body, improve the sealing effect and prolong the service life of the equipment.
   (12) When the outer arc surface snap spring is pushed to the position of the outer arc surface snap spring groove of the floating bushing positioning seat, the outer arc surface snap spring elastically stretches into the outer arc surface snap spring groove of the floating bushing positioning seat outwards, the floating bushing protection retainer ring is snap-fitted with the floating bushing positioning seat, the outer arc surface snap spring prevents the floating bushing protection retainer ring from dropping from the floating bushing positioning seat, during disassembly, the retainer ring is pried and pulled at a force larger than the deformation force of the outer arc surface snap spring to pull out the floating bushing protection retainer ring from the floating bushing positioning seat, the height of the arc surface of the outer arc surface snap spring groove is smaller than the radius of the outer arc surface of the outer arc surface snap spring, so as to prevent the situation that the outer arc surface snap spring cannot be clamped in the outer arc surface snap spring groove or the outer arc surface snap spring swings in the outer arc surface snap spring groove, the structure is trim and beautiful in outline, simple and reliable and is easy to install and detach, etc.
   (13) The spacer bushing outer sealing piece is arranged in the concave surface of the floating bushing positioning seat cavity, and the concave surface prevents the spacer bushing outer sealing piece from being displaced, which is beneficial for resetting the floating sealing bushing after floating, preventing the tilt of the sealing floating bushing caused by the displacement of the spacer bushing outer sealing piece when floating, and avoiding the situation that the eccentric wear spacer bushing inner sealing piece is difficult to reset after the tilt, and thus the stability and the reliability of the floating sealing reciprocating impact apparatus of the sealing floating bushing of the mining loader are improved.

### Brief Description of the Drawings

Fig.1 is a first schematic diagram of a structure of a floating sealing reciprocating impact apparatus of a sealing floating bushing of a mining loader in a first embodiment;
Fig.2 is a first schematic diagram of a structure of a floating bushing floating sealing mechanism in the first embodiment;
Fig.3 is a second schematic diagram of a structure of the floating bushing floating sealing mechanism in the first embodiment;
Fig.4 is a first schematic diagram of a structure of a floating bushing positioning seat in the first embodiment;
Fig.5 is a first schematic diagram of a structure of a sealing floating bushing in the first embodiment;
Fig.6 is a second schematic diagram of a structure of the sealing floating bushing in the first embodiment;
Fig.7 is a third schematic diagram of a structure of the floating bushing floating sealing mechanism in the first embodiment;
Fig.8 is a second schematic diagram of a structure of the floating sealing reciprocating impact apparatus of the sealing floating bushing of the mining loader in the first embodiment;
Fig.9 is a first schematic diagram of a structure of a floating bushing floating sealing mechanism in a second embodiment;
Fig.10 is a second schematic diagram of a structure of the floating bushing floating sealing mechanism in the second embodiment;
Fig.11 is a schematic diagram of a structure of a floating bushing positioning seat in the second embodiment;
Fig.12 is a schematic diagram of a structure of a floating bushing locking piece in the second embodiment;
Fig. 13 is a schematic diagram of a structure of a floating bushing floating sealing mechanism in a third embodiment;
Fig.14 is a schematic diagram of a structure of a sealing floating bushing in a fourth embodiment;
Fig.15 is a schematic diagram of a structure of a floating bushing floating sealing mechanism in the fourth embodiment;
Fig.16 is a schematic diagram of a structure of a floating bushing floating sealing mechanism in a fifth embodiment;
Fig.17 is a schematic diagram of a structure of a floating bushing floating sealing mechanism in a sixth embodiment;
Fig.18 is a schematic diagram of a structure of a spacer bushing outer sealing piece in the sixth embodiment;
Fig.19 is a schematic diagram of a structure of a floating sealing reciprocating impact apparatus of a sealing floating bushing of a mining loader in a seventh embodiment;
Fig.20 is a schematic diagram of a structure of a floating bushing floating sealing mechanism in the seventh embodiment;
Fig.21 is a schematic diagram of a structure of a floating bushing floating sealing mechanism in an eighth embodiment;
Fig.22 is a schematic diagram of a structure of an outer arc surface snap spring in the eighth embodiment;
Fig.23 is a schematic diagram of a C-C section in Fig.21;
Fig.24 is a schematic diagram of a sectional structure of the floating bushing floating sealing mechanism in the eighth embodiment;
Fig.25 is a schematic diagram of a structure of a floating bushing floating sealing mechanism in a ninth embodiment;
Fig.26 is a schematic diagram of a structure of a floating bushing floating sealing mechanism in a tenth embodiment;
Fig.27 is a schematic diagram of a structure of a floating bushing floating sealing mechanism in an eleventh embodiment;
Fig.28 is a schematic diagram of a structure of a floating bushing floating sealing mechanism in a twelfth embodiment;
Fig.29 is a schematic diagram of a structure of a floating bushing floating sealing mechanism in a thirteenth embodiment;
Fig.30 is a schematic diagram of a structure of a floating bushing floating sealing mechanism in a fourteenth embodiment.

In the figures: 1, reciprocating impact guide mechanism, 2, floating bushing floating sealing mechanism, 3, reciprocating impact box body, 4, impact guide piece, 5, reciprocating impact actuating mechanism, 6, impact head, 7, guide rod connecting piece, 8, power driving piece, 9, floating bushing locking piece, 10, spacer bushing outer sealing piece, 11, spacer bushing inner sealing piece, 12, floating bushing positioning seat, 13, sealing floating bushing, 14, retainer ring inner side plane, 15, sealing floating bushing locking piece hole slot, 16, floating bushing shoulder, 17, floating bushing positioning seat cavity, 18, floating bushing positioning seat outer port, 19, floating bushing outer end plane, 20, floating bushing inner end arc surface, 21, floating bushing outer end arc surface, 22, floating bushing inner end plane, 23, retainer ring, 24, retainer ring outer arc surface, 25, snap spring, 26, left sealing floating spacer bushing, 27, left spacer bushing inner sealing piece, 28, right sealing floating spacer bushing, 29, right spacer bushing inner sealing piece, 30, spacer bushing fixing piece, 31, left spacer bushing outer sealing piece, 32, right spacer bushing outer sealing piece, 33, outer side groove of sealing floating bushing, 34, spacer bushing inner sealing piece groove, 35, jackscrew hole, 36, floating bushing jackscrew rod, 37, jackscrew rod nut, 38, supporting nut piece, 39, jackscrew rod hole, 40, jackscrew structure, 41, open spacer bushing outer sealing piece, 42, left sealing spacer bushing, 43, open dustproof sealing piece, 44, open anti-leakage sealing piece, 45, open spacer bushing inner sealing piece, 46, dustproof spacer bushing inner sealing piece, 47, circular section spacer bushing outer sealing piece, 48, anti-leakage spacer bushing inner sealing piece, 49, open end, 50, guide box floating bushing positioning seat, 51, guide box, 52, power box floating bushing positioning seat, 53, partition board, 54, power box, 55, guide rod, 56, power box sealing floating bushing, 57, movement sealing plug, 58, sealing column, 59, outer arc surface snap spring, 60, outer arc surface, and 61, outer arc surface snap spring deformation groove.

### Detailed Description of the Embodiments

The present invention will be further illustrated below in combination with the accompanying drawings.

### First embodiment

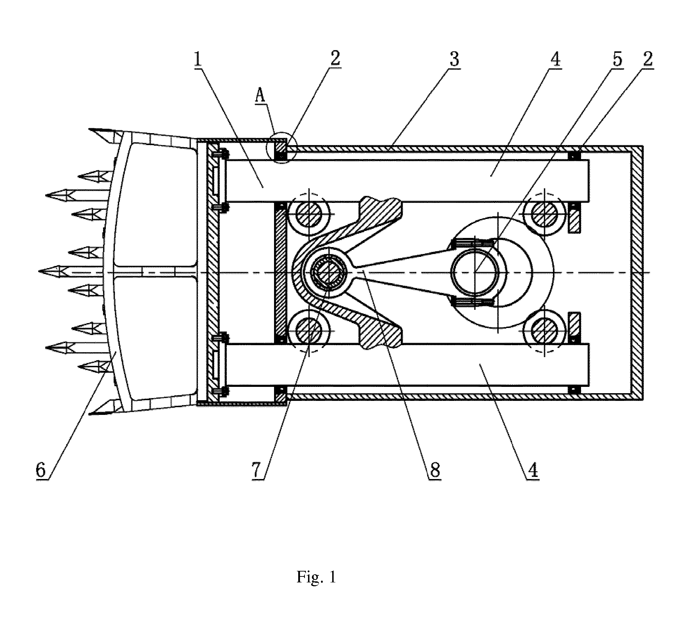

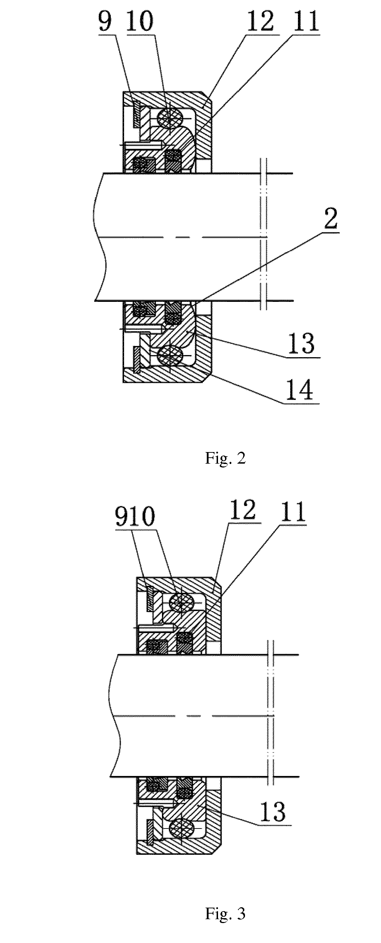

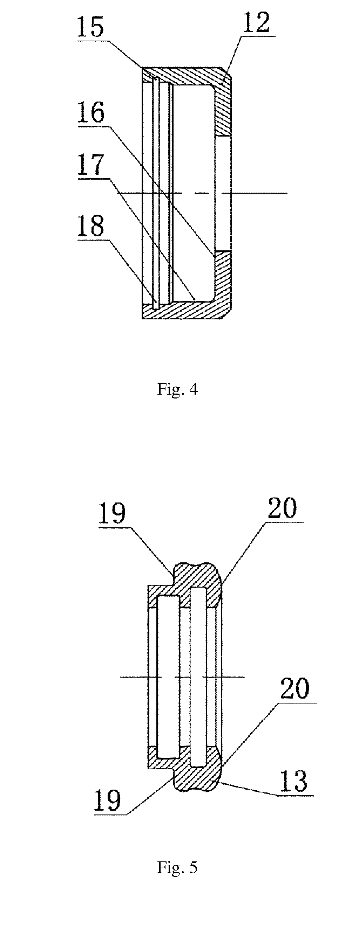

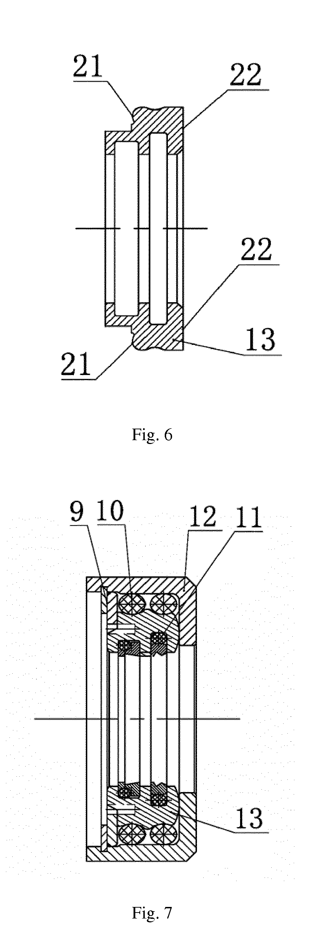

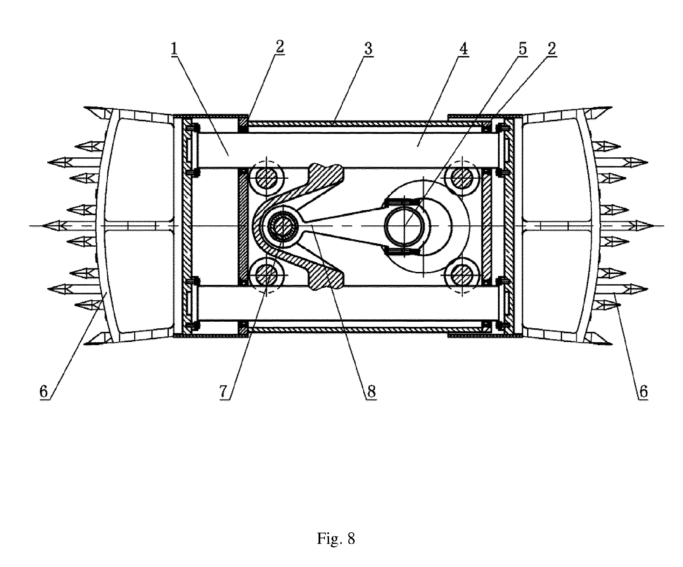

Fig.1 to Fig.8 show a floating sealing reciprocating impact apparatus of a sealing floating bushing of a mining loader in the first embodiment. The floating sealing reciprocating impact apparatus of the sealing floating bushing of the mining loader includes a reciprocating impact box body 3, a reciprocating impact guide mechanism 1, a reciprocating impact actuating mechanism 5, a floating bushing floating sealing mechanism 2 and an impact head 6 and the like, the floating bushing floating sealing mechanism 2 includes a floating bushing positioning seat 12, a sealing floating bushing 13, a spacer bushing outer sealing piece 10, a spacer bushing inner sealing piece 11 and a floating bushing locking piece 9 and the like, the floating bushing positioning seat 12 includes a floating bushing positioning seat outer port 18, a floating bushing positioning seat cavity 17 and a floating bushing shoulder 16 and the like, when an outer sealing end of the sealing floating bushing 13 is provided with a floating bushing outer end plane 19, a floating bushing inner end arc surface 20 and the like are arranged at an inner sealing end of the sealing floating bushing 13, or when the outer sealing end of the sealing floating bushing 13 is provided with a floating bushing outer end arc surface 21, a floating bushing inner end plane 22 and the like are arranged at the inner sealing end of the sealing floating bushing 13, more than one spacer bushing outer sealing piece 10 and the like are arranged on the outer side of the sealing floating bushing 13, more than one spacer bushing inner sealing piece 11 and the like are arranged on the inner side of the sealing floating bushing 13, the floating bushing positioning seat outer port 18, the floating bushing positioning seat cavity 17 and the floating bushing shoulder 16 and the like are separately connected or integrated, a sealing floating bushing locking piece hole slot 15 and the like are arranged at the floating bushing positioning seat outer port 18, the floating bushing positioning seat 12 is arranged on the reciprocating impact box body 3, the floating bushing positioning seat 12 and the reciprocating impact box body 3 are separately connected or integrated, the reciprocating impact guide mechanism 1 includes an impact guide piece 4 and a guide rod connecting piece 7 and the like, the guide rod connecting piece 7 and the like are arranged in the reciprocating impact box body 3, the guide rod connecting piece 7 and the impact guide piece 4 and the like are separately connected or integrated, one end or both ends of the impact guide piece 4 stretch out from the reciprocating impact box body 3, the sealing floating bushing 13, the spacer bushing outer sealing piece 10 and the spacer bushing inner sealing piece 11 and the like are arranged in the floating bushing positioning seat cavity 17, the sealing floating bushing 13 snap-fits the spacer bushing outer sealing piece 10 between the outer side of the sealing floating bushing 13 and the floating bushing positioning seat 12, the impact guide piece 4 penetrates through the spacer bushing inner sealing piece 11, the spacer bushing inner sealing piece 11 is arranged among the floating bushing shoulder 16, the sealing floating bushing 13 and the impact guide piece 4 and/or is arranged between the inner side of the sealing floating bushing 13 and the impact guide piece 4, the floating bushing locking piece 9 is arranged in the sealing floating bushing locking piece hole slot 15, when the floating bushing outer end plane 19 is attached to the floating bushing locking piece 9, the floating bushing inner end arc surface 20 leans against the floating bushing shoulder 16, or when the floating bushing outer end arc surface 21 leans against the floating bushing locking piece 9, the floating bushing inner end plane 22 is attached to the floating bushing shoulder 16, thus allowing the floating bushing shoulder 16 to prevent the sealing floating bushing 13 from dropping from one side of the floating bushing shoulder 16, and allowing the floating bushing locking piece 9 to prevent the sealing floating bushing 13 from dropping from the floating bushing positioning seat outer port 18, the impact head 6 is arranged at one end or both ends of the impact guide piece 4, the impact head 6 and the impact guide piece 4 are separately connected or integrated, the reciprocating impact actuating mechanism 5 includes a power driving piece 8 and the like, the power driving piece 8 drives the guide rod connecting piece 7 to drive the impact guide piece 4 and the like to carry out reciprocating impact, the impact head 6 at the end part of the impact guide piece 4 impacts a coal wall or a stone wall or concrete or ore rock and the like, a huge lateral force and/or reactive force is applied to the impact guide piece 4, the impact guide piece 4 impacts the spacer bushing inner sealing piece 11, the spacer bushing inner sealing piece 11 drives the sealing floating bushing 13 to float, the sealing floating bushing 13 pushes and extrudes the floating bushing locking piece 9, the spacer bushing outer sealing piece 10 and/or the floating bushing shoulder 16 and floats, the floating bushing locking piece 9 swings, the spacer bushing outer sealing piece 10 deforms to absorb the lateral force and/or the reactive force, the sealing floating bushing 13, the spacer bushing inner sealing piece 11 and the spacer bushing outer sealing piece 10 and the like float and seal in the floating bushing positioning seat 12 to prevent the impact guide piece 4 from damaging the spacer bushing inner sealing piece 11, the spacer bushing outer sealing piece 10 and/or the sealing floating bushing 13 and the like, the spacer bushing outer sealing piece 10, the spacer bushing inner sealing piece 11, the floating bushing locking piece 9, the floating bushing inner end arc surface 20, the floating bushing outer end plane 19 and the floating bushing shoulder 16 and the like cooperate to correct the sealing floating bushing 13, thus allowing the sealing floating bushing 13 to be corrected while floating and sealing, and avoiding that the eccentric wear spacer bushing inner sealing piece 11 cannot be adjusted after the floating sealing bushing tilts, the spacer bushing outer sealing piece 10 and the sealing floating bushing 13 are separately combined or integrated, or the spacer bushing outer sealing piece 10 and the floating bushing positioning seat 12 are separately connected or integrated, the floating bushing locking piece 9 and the floating bushing shoulder 16 and the like prevent the impact guide piece 4 from dropping the sealing floating bushing 13, the spacer bushing outer sealing piece 10 and the spacer bushing inner sealing piece 11 and the like from the floating bushing positioning seat 12 in a reciprocating process.

The floating bushing locking piece 9 includes a floating bushing protection retainer ring 23 and the like, and the floating bushing protection retainer ring 23 includes a rubber floating bushing retainer ring 23, a metal floating bushing protection retainer ring 23 or a plastic floating bushing protection retainer ring 23 or a wood floating bushing protection retainer ring 23 and the like.

The sealing floating bushing 13 includes a rubber sealing floating bushing 13, a metal sealing floating bushing 13 or a plastic sealing floating bushing 13 or a wood sealing floating bushing 13 and the like.

The present invention further provides the following method for realizing floating sealing of the sealing floating bushing 13:
First method:
   The method includes the following steps:
      a first step: arranging a sealing floating bushing and the like, arranging a floating adjustment surface and the like at the end part of the sealing floating bushing, forming the floating adjustment surface into a plane, an arc surface, an inclined plane, a conical surface or a curved surface and the like, when forming an outer sealing end of the sealing floating bushing into a floating bushing outer end plane, arranging a floating bushing inner end arc surface and the like at an inner sealing end of the sealing floating bushing, or when forming the outer sealing end of the sealing floating bushing into a floating bushing outer end arc surface, arranging a floating bushing inner end plane and the like at the inner sealing end of the sealing floating bushing, or when forming the outer sealing end of the sealing floating bushing into a floating bushing outer end arc surface, arranging a floating bushing inner end arc surface at the inner sealing end of the sealing floating bushing, or when forming the outer sealing end of the sealing floating bushing into a floating bushing outer end plane, arranging a floating bushing inner end plane at the inner sealing end of the sealing floating bushing, or when forming the outer sealing end of the sealing floating bushing into a floating bushing outer end inclined plane, arranging a floating bushing inner end plane at the inner sealing end of the sealing floating bushing, or when forming the outer sealing end of the sealing floating bushing into a floating bushing outer end plane, arranging a floating bushing inner end conical surface at the inner sealing end of the sealing floating bushing, or when forming the outer sealing end of the sealing floating bushing into a floating bushing outer end plane, arranging a floating bushing inner end curved surface at the inner sealing end of the sealing floating bushing, and the like;
      a second step: arranging a spacer bushing outer sealing piece, a spacer bushing inner sealing piece and the like, arranging more than one spacer bushing outer sealing piece on the outer side of the sealing floating bushing, and arranging more than one spacer bushing inner sealing piece and the like on the inner side of the sealing floating bushing, and the like;
      a third step: arranging a floating bushing positioning seat outer port, a floating bushing positioning seat cavity and a floating bushing shoulder and the like to form a floating bushing positioning seat, separately connecting or integrally arranging the floating bushing positioning seat outer port, the floating bushing positioning seat cavity and the floating bushing shoulder, and arranging a sealing floating bushing locking piece hole slot and the like at the floating bushing positioning seat outer port;
      a fourth step: arranging a reciprocating impact box body and the like, and arranging the floating bushing positioning seat on the reciprocating impact box body, wherein the floating bushing positioning seat and the reciprocating impact box body and the like are separately connected or integrated;
      a fifth step: arranging a impact guide piece and a guide rod connecting piece and the like, arranging the guide rod connecting piece in the reciprocating impact box body, and separately connecting or integrating the guide rod connecting piece and the impact guide piece and the like;
      a sixth step: pushing the spacer bushing outer sealing piece, the spacer bushing inner sealing piece and the sealing floating bushing into the floating bushing positioning seat cavity from the floating bushing positioning seat outer port, snap-fitting the spacer bushing outer sealing piece between the outer side of the sealing floating bushing and the floating bushing positioning seat by the sealing floating bushing, penetrating the impact guide piece through the spacer bushing inner sealing piece, arranging the spacer bushing inner sealing piece among the floating bushing shoulder, the sealing floating bushing and the impact guide piece and/or between the inner side of the sealing floating bushing and the impact guide piece;
      a seventh step: arranging a floating bushing locking piece and the like, arranging the floating bushing locking piece and the like in the sealing floating bushing locking piece hole slot, when the floating bushing outer end plane is attached to the floating bushing locking piece, leaning the floating bushing inner end arc surface against the floating bushing shoulder, or when the floating bushing outer end arc surface leans against the floating bushing locking piece, attaching the floating bushing inner end plane to the floating bushing shoulder, thus allowing the floating bushing shoulder to prevent the sealing floating bushing from dropping from one side of the floating bushing shoulder, and allowing the floating bushing locking piece to prevent the sealing floating bushing from dropping from the floating bushing positioning seat outer port;
      an eighth step: arranging the impact head and the like, arranging the impact head at one end or both ends of the impact guide piece, and separately connecting or integrating the impact head and the impact guide piece and the like; and
      a ninth step: arranging a power driving piece and the like, and making the power driving piece drive the guide rod connecting piece to drive the impact guide piece to carry out reciprocating impact, wherein the impact head arranged at the end part of the impact guide piece impacts a coal wall or a stone wall or concrete or ore rock and the like, due to the hardness of the coal wall or the stone wall or the concrete or the ore rock and the like, the impact head generates a huge lateral force and/or reactive force, the huge lateral force and/or reactive force drives the impact guide piece to impact the spacer bushing inner sealing piece, the spacer bushing inner sealing piece drives the sealing floating bushing to float, the sealing floating bushing pushes and extrudes the floating bushing locking piece, the spacer bushing outer sealing piece and/or the floating bushing shoulder and floats, the floating bushing locking piece swings, the spacer bushing outer sealing piece deforms to absorb the lateral force and/or the reactive force, the sealing floating bushing, the spacer bushing inner sealing piece and the spacer bushing outer sealing piece and the like float and seal in the floating bushing positioning seat to prevent the impact guide piece from damaging the spacer bushing inner sealing piece, the spacer bushing outer sealing piece and/or the sealing floating bushing and the like, the spacer bushing outer sealing piece, the spacer bushing inner sealing piece, the floating bushing locking piece, the floating bushing inner end arc surface, the floating bushing outer end plane and the floating bushing shoulder and the like cooperate to correct the sealing floating bushing, thus allowing the sealing floating bushing to be corrected while floating and sealing, and avoiding that the eccentric wear spacer bushing inner sealing piece cannot be adjusted after the floating sealing bushing tilts.
Second method:
   a first step: forming the floating bushing locking piece into a snap spring or an elastic pin or a locking pin or a taper pin or an expansion pin or a retainer ring or a spacer bushing or a steel wire or a rope and the like, and singly using or cooperatively using the snap spring, the elastic pin, the locking pin, the taper pin, the expansion pin, the retainer ring, the spacer bushing, the steel wire and the rope and the like;
   a second step: when the snap spring is singly used, directly attaching the snap spring to the sealing floating bushing, and when the snap spring is cooperatively used with the retainer ring, arranging the snap spring on one side of the retainer ring, and arranging the sealing floating bushing on the other side of the retainer ring;
   a third step: arranging the floating bushing outer end arc surface for rotating relative to the floating bushing locking piece of the sealing floating bushing on the sealing floating bushing at the joint of the sealing floating bushing and the floating bushing locking piece, and/or arranging the floating bushing inner end arc surface and the like for rotating relative to the floating bushing shoulder of the sealing floating bushing on the sealing floating bushing at the joint of the sealing floating bushing and the floating bushing shoulder;
   a fourth step: forming an end close to the sealing floating bushing of the retainer ring into a plane, an arc surface, an inclined plane, a conical surface or a curved surface and the like, when the floating bushing inner end arc surface is close to the floating bushing shoulder, forming the end close to the sealing floating bushing of the retainer ring into a retainer ring inner side plane, and attaching the retainer ring inner side plane to the floating bushing outer end plane;
   a fifth step: forming a joint of the outer side of the retainer ring and the floating bushing positioning seat into an retainer ring outer arc surface or an retainer ring outer cylindrical surface or a retainer ring outer plane and the like; and
   a sixth step: leaning the inner side plane retainer ring against the snap spring, wherein when the impact head generates the huge lateral force and/or reactive force to be applied to the impact guide piece, the impact guide piece impacts the spacer bushing inner sealing piece, the spacer bushing inner sealing piece drives the sealing floating bushing to float, the sealing floating bushing pushes and extrudes the retainer ring, the retainer ring outer arc surface rotates relative to the floating bushing positioning seat to push and extrude the snap spring, so as to drive the snap spring to swing, the sealing floating bushing pushes and extrudes the spacer bushing outer sealing piece, the spacer bushing outer sealing piece deforms to absorb the lateral force and/or the reactive force, the snap spring, the retainer ring, the spacer bushing outer sealing piece, the spacer bushing inner sealing piece, the floating bushing inner end arc surface, the floating bushing outer end plane and the like cooperate with the floating bushing shoulder to correct the sealing floating bushing, thus allowing the sealing floating bushing to be corrected while floating and sealing, and avoiding that the eccentric wear spacer bushing inner sealing piece cannot be adjusted after the floating sealing bushing tilts.

### Second embodiment

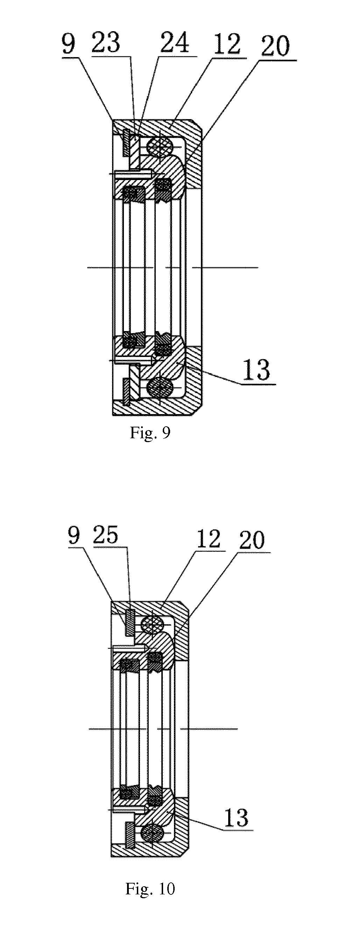

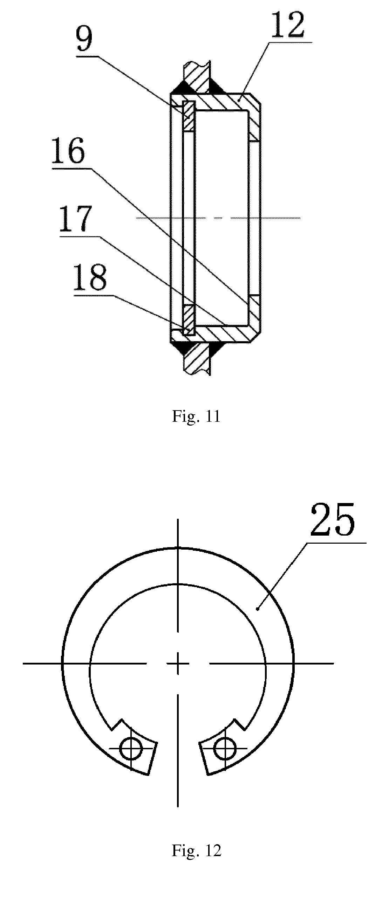

As shown in Fig.9 to Fig.12, they show the floating sealing reciprocating impact apparatus of the sealing floating bushing of the mining loader as shown in the second embodiment, and the difference from the first embodiment lies in that: the floating bushing locking piece 9 includes a snap spring 25 or an elastic pin or a locking pin or a taper pin or an expansion pin or a retainer ring 23 or a spacer bushing or a steel wire or a rope and the like, the snap spring 25, the elastic pin, the locking pin, the taper pin, the expansion pin, the retainer ring 23, the spacer bushing, the steel wire and the rope and the like are singly used or cooperatively used, when the snap spring 25 is singly used, the snap spring 25 is directly attached to the sealing floating bushing 13, and when the snap spring 25 is cooperatively used with the retainer ring 23, the snap spring 25 is arranged on one side of the retainer ring 23, the sealing floating bushing 13 and the like are arranged on the other side of the retainer ring 23, the floating bushing outer end arc surface 21 for rotating relative to the floating bushing locking piece 9 of the sealing floating bushing 13 is arranged on the sealing floating bushing 13 at the joint of the sealing floating bushing 13 and the floating bushing locking piece 9, and/or the floating bushing inner end arc surface 20 and the like for rotating relative to the floating bushing shoulder 16 of the sealing floating bushing 13 is arranged on the sealing floating bushing 13 at the joint of the sealing floating bushing 13 and the floating bushing shoulder 16, an end close to the sealing floating bushing of the retainer ring is provided with a plane, an arc surface, an inclined plane, a conical surface or a curved surface and the like, when the floating bushing inner end arc surface is close to the floating bushing shoulder, the end close to the sealing floating bushing of the retainer ring is provided with a retainer ring inner side plane, the retainer ring inner side plane is attached to the floating bushing outer end plane, a joint of the outer side of the retainer ring 23 and the floating bushing positioning seat 12 is formed into an retainer ring outer arc surface 24 or an retainer ring 23 outer cylindrical surface or a retainer ring 23 outer plane and the like, the outer side of the retainer ring 23 leans against the snap spring 25, when the impact head 6 generates the huge lateral force and/or reactive force to be applied to the impact guide piece 4, the impact guide piece 4 impacts the spacer bushing inner sealing piece 11, the spacer bushing inner sealing piece 11 drives the sealing floating bushing 13 to float, the sealing floating bushing 13 pushes and extrudes the retainer ring 23, the retainer ring outer arc surface 24 rotates relative to the floating bushing positioning seat 12 to push and extrude the snap spring 25, the snap spring 25 swings, the sealing floating bushing 13 pushes and extrudes the spacer bushing outer sealing piece 10, the spacer bushing outer sealing piece 10 deforms to absorb the lateral force and/or the reactive force, the snap spring 25, the retainer ring 23, the spacer bushing outer sealing piece 10, the spacer bushing inner sealing piece 11, the floating bushing inner end arc surface 20, the floating bushing outer end plane 19, the floating bushing shoulder 16 and the like cooperate to correct the sealing floating bushing 13, thus allowing the sealing floating bushing 13 to be corrected while floating and sealing, and avoiding that the eccentric wear spacer bushing inner sealing piece 11 cannot be adjusted after the floating sealing bushing tilts.

The rest is the same as the first embodiment.

### Third embodiment

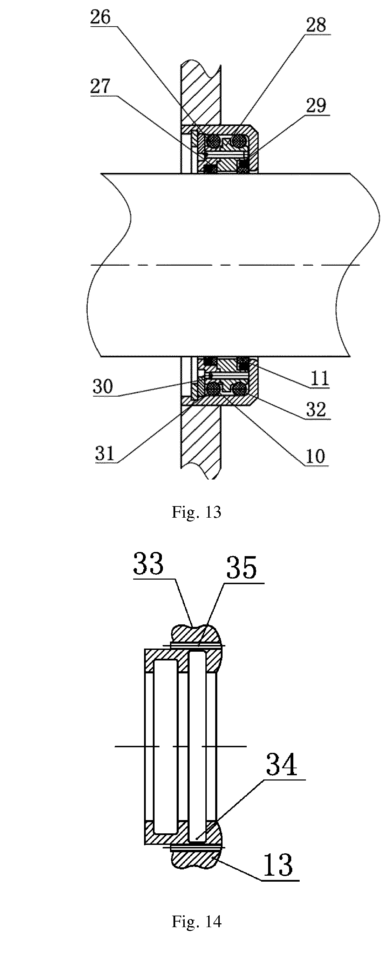

As shown in Fig.13, it shows the floating sealing reciprocating impact apparatus of the sealing floating bushing of the mining loader as shown in the third embodiment, and the difference from the first embodiment lies in that: the sealing floating bushing 13 further includes a left sealing floating spacer bushing 26 and a right sealing floating spacer bushing 28 and the like, the left sealing floating spacer bushing 26 and the right sealing floating spacer bushing 28 and the like are separately connected or integrated, the spacer bushing inner sealing piece 11 includes a left spacer bushing inner sealing piece 27 and/or a right spacer bushing inner sealing piece 29 and the like, the spacer bushing outer sealing piece 10 includes a left spacer bushing outer sealing piece 31 and/or a right spacer bushing outer sealing piece 32 and the like, the left spacer bushing outer sealing piece 31 is arranged on the outer side of the left sealing floating spacer bushing 26 and/or the right spacer bushing outer sealing piece 32 is arranged on the outer side of the right sealing floating spacer bushing 28, and the left spacer bushing inner sealing piece 27 is arranged on the inner side of the left sealing floating spacer bushing 26 and/or the right spacer bushing inner sealing piece 29 is arranged on the inner side of the right sealing floating spacer bushing 28.

The rest is the same as the first embodiment.

### Fourth embodiment

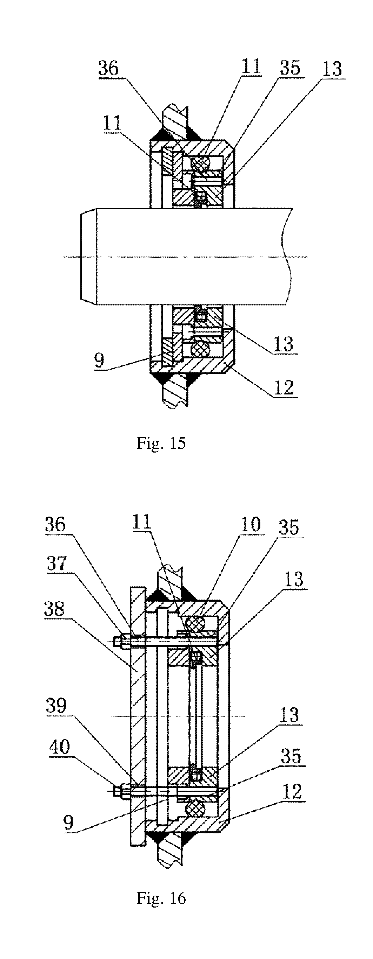

As shown in Fig.14 and Fig.15, they show the floating sealing reciprocating impact apparatus of the sealing floating bushing of the mining loader as shown in the fourth embodiment, and the difference from the first embodiment lies in that: the sealing floating bushing 13 includes a lifting lug, a disassembly groove or a jackscrew structure 40 and the like, the lifting lug, the disassembly groove or a jackscrew hole 35 and the like are arranged in the sealing floating bushing 13, and the sealing floating bushing 13 is taken out from the floating bushing positioning seat 12 through the lifting lug, the disassembly groove or the jackscrew structure 40 and the like.

The jackscrew structure 40 includes the jackscrew hole 35 and a floating bushing jackscrew rod 36 and the like, when the spacer bushing inner sealing piece 11, the spacer bushing outer sealing piece 10 and the like are damaged and need to be changed, the floating bushing locking piece 9 is taken out from the floating bushing positioning seat 12, the floating bushing jackscrew rod 36 is arranged in the jackscrew hole 35, and the floating bushing jackscrew rod 36 is rotated to take out the sealing floating bushing 13 from the floating bushing positioning seat 12.

The sealing floating bushing 13 includes an outer side groove 33 of the sealing floating bushing and/or an outer side cylindrical surface 13 of the sealing floating bushing and the like, a spacer bushing inner sealing piece groove 34 and the like are formed on the inner side of the sealing floating bushing 13, the spacer bushing outer sealing piece 10 is arranged in the outer side groove 33 of the sealing floating bushing and/or the spacer bushing outer sealing piece 10 is arranged on the outer side cylindrical surface of the sealing floating bushing 13 and the like, and the spacer bushing inner sealing piece 11 is arranged in the spacer bushing inner sealing piece groove 34 and/or the spacer bushing inner sealing piece 11 is arranged between the sealing floating bushing 13 and the floating bushing shoulder 16 and the like.

The rest is the same as the first embodiment.

### Fifth embodiment

As shown in Fig.16, it shows the floating sealing reciprocating impact apparatus of the sealing floating bushing of the mining loader as shown in the fifth embodiment, and the difference from the first embodiment lies in that: the jackscrew structure 40 includes the jackscrew hole 35, the floating bushing jackscrew rod 36, a jackscrew rod nut 37 and a supporting nut piece 38 and the like, the supporting nut piece 38 includes a jackscrew rod hole 39 and the like, when the spacer bushing inner sealing piece 11, the spacer bushing outer sealing piece 10 and the like are damaged and need to be changed, the floating bushing jackscrew rod 36 is screwed into the jackscrew hole 35 by penetrating through the jackscrew rod hole 39, the jackscrew rod nut 37 is arranged on the floating bushing jackscrew rod 36, the jackscrew rod nut 37 is rotated to support the jackscrew rod nut 37 by the supporting nut piece 38, and the floating bushing jackscrew rod 36 and the sealing floating bushing 13 are taken out from the floating bushing positioning seat 12 by the jackscrew rod nut 37.

The rest is the same as the first embodiment.

### Sixth embodiment

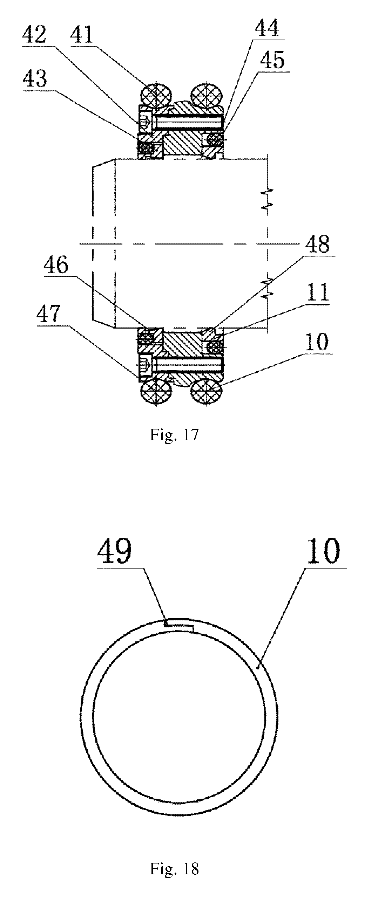

As shown in Fig.17 to Fig.18, they show the floating sealing reciprocating impact apparatus of the sealing floating bushing of the mining loader as shown in the sixth embodiment, and the difference from the first embodiment lies in that: the spacer bushing outer sealing piece 10 includes an open spacer bushing outer sealing piece 41 and/or the spacer bushing inner sealing piece 11 includes an open spacer bushing inner sealing piece 45 and the like, the open spacer bushing inner sealing piece 45 includes an open dustproof sealing piece 43 and/or an open anti-leakage sealing piece 44 and the like, when the spacer bushing inner sealing piece 11, the spacer bushing outer sealing piece 10 and the like are damaged and need to be changed, the damaged spacer bushing inner sealing piece 11 and spacer bushing outer sealing piece 10 and the like are changed by the open spacer bushing outer sealing piece 41 and the open spacer bushing inner sealing piece 45, open ends 49 of the open spacer bushing outer sealing piece 41 and the open spacer bushing inner sealing piece 45 and the like are placed at the upper part of the sealing floating bushing 13, and the open end 49 of the open spacer bushing outer sealing piece 41 is fastened to, or fritted to, or bonded to or inserted into, or connected in other manners to the open end 49 of the open spacer bushing inner sealing piece 45.

The spacer bushing inner sealing piece 11 includes a dustproof spacer bushing inner sealing piece 46 and/or an anti-leakage spacer bushing inner sealing piece 48 and the like, the dustproof spacer bushing inner sealing piece 46 is arranged at a position close to the impact head 6 on the sealing floating bushing 13, and the anti-leakage spacer bushing inner sealing piece 48 is arranged at a position close to the guide rod connecting piece 7 on the sealing floating bushing 13.

The rest is the same as the first embodiment.

### Seventh embodiment

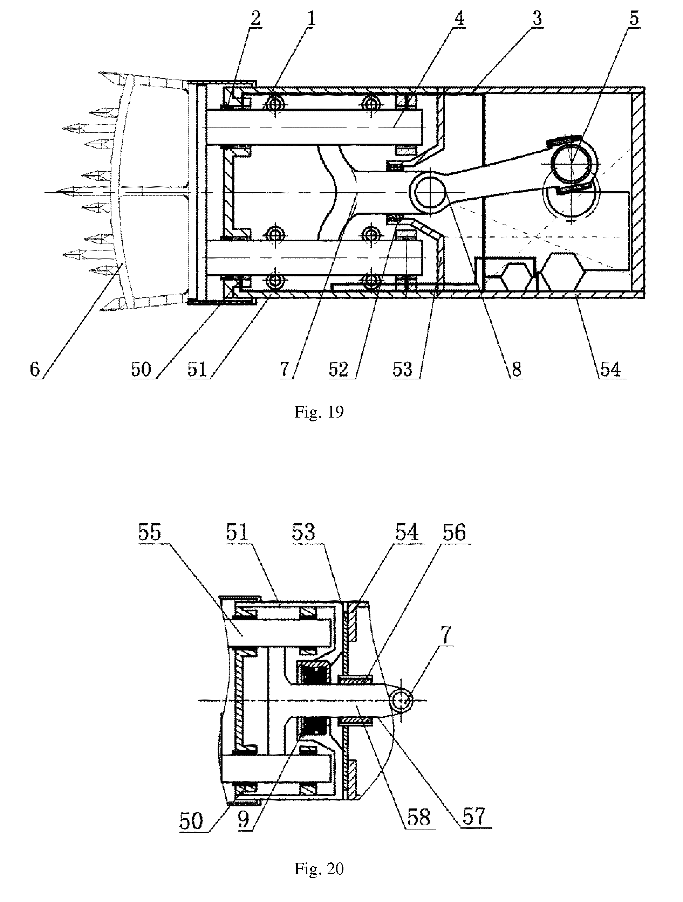

As shown in Fig.19 to Fig.20, they show the floating sealing reciprocating impact apparatus of the sealing floating bushing of the mining loader as shown in the seventh embodiment, and the difference from the first embodiment lies in that: the reciprocating impact box body 3 includes a power box 54, a guide box 51 and a partition board 53 and the like, the impact guide piece 4 is arranged in the guide box 51, the partition board 53 is arranged between the power box 54 and the guide box 51, the floating bushing positioning seat 12 includes a guide box floating bushing positioning seat 50 and/or a power box floating bushing positioning seat 52 and the like, the sealing floating bushing 13 includes a guide box 51 sealing floating bushing 13 and/or a power box sealing floating bushing 56 and the like, the power box floating bushing positioning seat 52 is arranged on the partition board 53, the power box sealing floating bushing 56 is arranged in the power box floating bushing positioning seat 52, the impact guide piece 4 further includes a guide rod 55 and the like, a movement sealing plug 57 or a movement sealing jacket and the like are arranged on the guide rod connecting piece 7, the power box sealing floating bushing 56 cooperates with the movement sealing plug 57 or the movement sealing jacket and the like for sealing and preventing liquid, materials or dust and the like from entering the guide box 51 from the power box 54, the guide box floating bushing positioning seat 50 and the like are arranged at the cooperation site of the guide rod 55 and the guide box 51, the guide box 51 sealing floating bushing 13 and the like are arranged in the guide box floating bushing positioning seat 50, the movement sealing plug 57 or the movement sealing jacket includes a sealing column 58 and the like, the sealing column 58 cooperates with the power box sealing floating bushing 56 for sealing, the movement sealing plug 57 or the movement sealing jacket and the guide rod connecting piece 7 and the like are separately connected or integrated, the floating bushing locking piece 9 prevents the sealing floating bushing 13 from dropping from the partition board 53 floating bushing positioning seat 12, and/or the floating bushing locking piece 9 prevents the sealing floating bushing 13 from dropping from the interior of the guide box floating bushing positioning seat 50.

The rest is the same as the first embodiment.

### Eighth embodiment

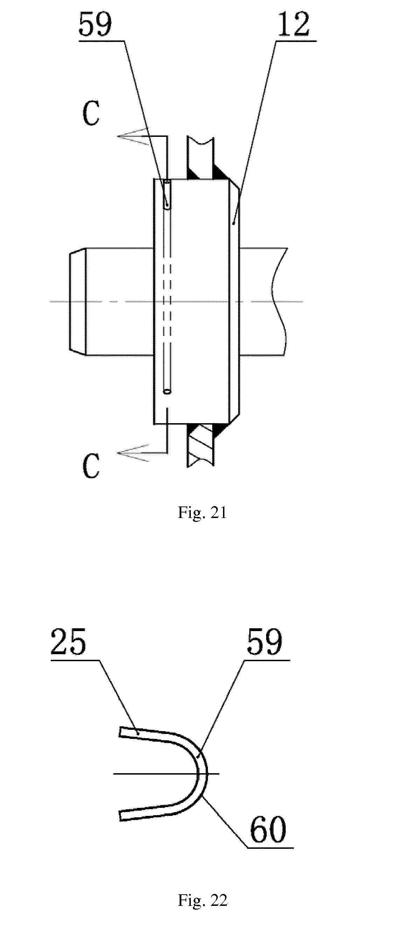

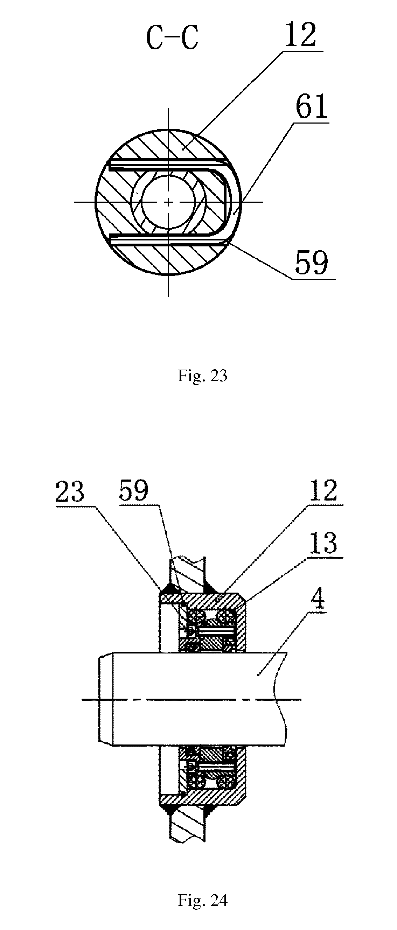

As shown in Fig.21 to Fig.24, they show the floating sealing reciprocating impact apparatus of the sealing floating bushing of the mining loader as shown in the eighth embodiment, and the difference from the first embodiment lies in that: the snap spring 25 includes a hole elastic retainer ring 23 or an outer arc surface snap spring 59 and the like, a hole elastic retainer ring 23 groove and the like are formed on the floating bushing positioning seat 12, the hole elastic retainer ring 23 is placed in the hole elastic retainer ring 23 groove, or an outer arc surface snap spring deformation groove 61 and the like are formed in the floating bushing positioning seat 12, an outer arc surface snap spring deformation groove 61 and the like matched with an outer arc surface snap spring 59 groove of the floating bushing positioning seat 12 are formed on the floating bushing protection retainer ring 23, the outer arc surface snap spring 59 is arranged on the outer arc surface snap spring deformation groove 61, the sealing floating bushing 13 is pushed into the floating bushing positioning seat 12, a hole wall of the floating bushing positioning seat 12 compresses the outer arc surface snap spring 59 into the outer arc surface snap spring deformation groove 61, when the outer arc surface snap spring 59 is pushed to the position of the outer arc surface snap spring groove 59 of the floating bushing positioning seat 12, the outer arc surface snap spring 59 elastically stretches into the outer arc surface snap spring 59 groove of the floating bushing positioning seat 12 outwards, the floating bushing protection retainer ring 23 is snap-fitted with the floating bushing positioning seat 12, the outer arc surface snap spring 59 prevents the floating bushing protection retainer ring 23 and the like from dropping from the floating bushing positioning seat 12, during disassembly, the retainer ring 23 is pried and pulled at a force larger than the deformation force of the outer arc surface snap spring 59, the floating bushing protection retainer ring 23 moves outwards from the floating bushing positioning seat 12 to push the outer arc surface snap spring 59 into the outer arc surface snap spring deformation groove 61 and pull out the floating bushing protection retainer ring 23 and the like from the floating bushing positioning seat 12, the height of the arc surface of the outer arc surface snap spring 59 groove is smaller than the radius of the outer arc surface 60 of the outer arc surface snap spring 59, and the radius of the arc surface of the outer arc surface snap spring 59 groove is larger than or equal to the radius of the outer arc surface 60 of the outer arc surface snap spring 59.

The rest is the same as the first embodiment.

### Ninth embodiment

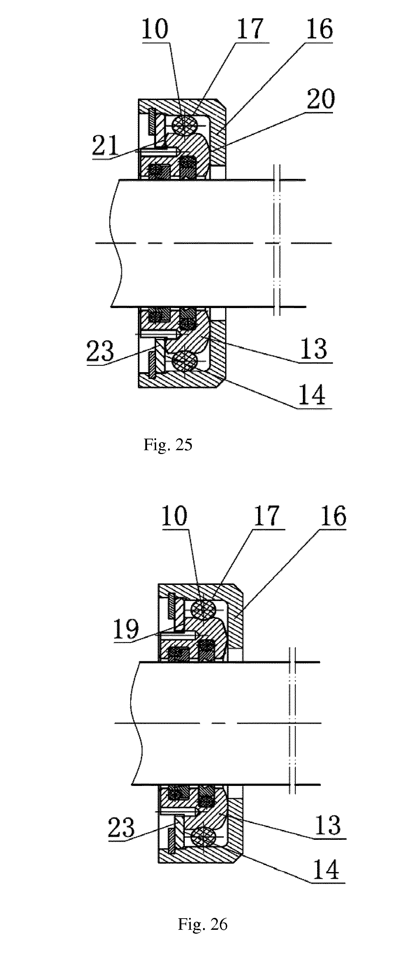

As shown in Fig.25, an end part of the sealing floating bushing 13 includes a floating adjustment surface and the like, the floating adjustment surface includes a plane, an arc surface, an inclined plane, a conical surface or a curved surface and the like, when an outer sealing end of the sealing floating bushing 13 is provided with a floating bushing outer end arc surface 21, a floating bushing inner end arc surface 20 is arranged at the inner sealing end of the sealing floating bushing 13.

An end close to the sealing floating bushing 13 of the retainer ring 23 is provided with a plane, an arc surface, an inclined plane, a conical surface or a curved surface and the like, when the floating bushing inner end arc surface 20 is close to the floating bushing shoulder 16, the end close to the sealing floating bushing 13 of the retainer ring 23 is provided with a retainer ring inner side plane 14, the retainer ring inner side plane 14 is attached to the floating bushing outer end arc surface 21.

The end leaning against the sealing floating bushing 13 of the floating bushing shoulder 16 includes a plane, an arc surface, an inclined plane, a conical surface or a curved surface and the like.

An inner side wall of the floating bushing positioning seat cavity 17 includes a plane or a concave surface or a convex surface and the like, the spacer bushing outer sealing piece 10 is arranged in the concave surface of the floating bushing positioning seat cavity, and the concave surface prevents the spacer bushing outer sealing piece 10 from being displaced.

The rest is the same as the first embodiment.

### Tenth embodiment

As shown in Fig.26, an end part of the sealing floating bushing 13 includes a floating adjustment surface and the like, the floating adjustment surface includes a plane, an arc surface, an inclined plane, a conical surface or a curved surface and the like, when the outer sealing end of the sealing floating bushing 13 is provided with the floating bushing outer end plane 19, a floating bushing inner end conical surface is arranged at the inner sealing end of the sealing floating bushing 13.

The end close to the sealing floating bushing 13 of the retainer ring 23 is provided with a plane, an arc surface, an inclined plane, a conical surface or a curved surface and the like, when the floating bushing inner end arc surface is close to the floating bushing shoulder, the end close to the sealing floating bushing of the retainer ring 23 is provided with a retainer ring inner side plane 14, and the retainer ring inner side plane 14 is attached to the floating bushing outer end plane.

The end leaning against the sealing floating bushing of the floating bushing shoulder 16 includes a plane, an arc surface, an inclined plane, a conical surface or a curved surface and the like.

An inner side wall of the floating bushing positioning seat cavity 17 includes a plane or a concave surface or a convex surface and the like, the spacer bushing outer sealing piece 10 is arranged in the concave surface of the floating bushing positioning seat cavity, and the concave surface prevents the spacer bushing outer sealing piece 10 from being displaced.

The rest is the same as the first embodiment.

### Eleventh embodiment

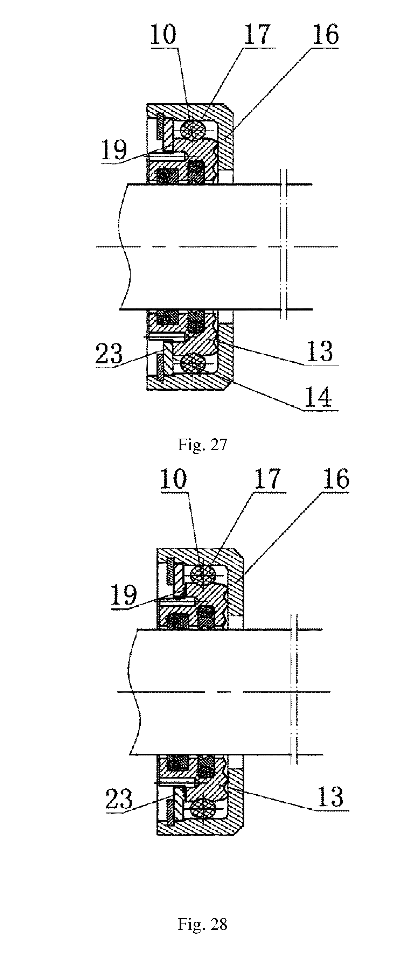

As shown in Fig.27, an end part of the sealing floating bushing 13 includes a floating adjustment surface and the like, the floating adjustment surface includes a plane, an arc surface, an inclined plane, a conical surface or a curved surface and the like, and when an outer sealing end of the sealing floating bushing 13 is provided with a floating bushing outer end plane 19, a floating bushing inner end curved surface is arranged at the inner sealing end of the sealing floating bushing.

The end close to the sealing floating bushing of the retainer ring 23 is provided with a plane, an arc surface, an inclined plane, a conical surface or a curved surface and the like, when the floating bushing inner end curved surface is close to the floating bushing shoulder 16, a retainer ring inner side plane 14 is arranged at the end close to the sealing floating bushing of the retainer ring 23, and the retainer ring inner side plane 14 is attached to the floating bushing outer end plane 19.

The end leaning against the sealing floating bushing of the floating bushing shoulder 16 includes a plane, an arc surface, an inclined plane, a conical surface or a curved surface and the like.

An inner side wall of the floating bushing positioning seat cavity 17 includes a plane or a concave surface or a convex surface and the like, the spacer bushing outer sealing piece 10 is arranged in the concave surface of the floating bushing positioning seat cavity, and the concave surface prevents the spacer bushing outer sealing piece 10 from being displaced.

The rest is the same as the first embodiment.

### Twelfth embodiment

As shown in Fig.28, an end part of the sealing floating bushing 13 includes a floating adjustment surface and the like, the floating adjustment surface includes a plane, an arc surface, an inclined plane, a conical surface or a curved surface and the like, and when an outer sealing end of the sealing floating bushing 13 is provided with a floating bushing outer end plane 19, a floating bushing inner end curved surface is arranged at the inner sealing end of the sealing floating bushing.

The end close to the sealing floating bushing of the retainer ring 23 is provided with a plane, an arc surface, an inclined plane, a conical surface or a curved surface and the like, when the floating bushing inner end curved surface is close to the floating bushing shoulder 16, a retainer ring inner side curved surface is arranged at the end close to the sealing floating bushing of the retainer ring 23, and the retainer ring inner side curved surface is attached to the floating bushing outer end plane 19.

The end leaning against the sealing floating bushing of the floating bushing shoulder 16 includes a plane, an arc surface, an inclined plane, a conical surface or a curved surface and the like.

An inner side wall of the floating bushing positioning seat cavity 17 includes a plane or a concave surface or a convex surface and the like, the spacer bushing outer sealing piece 10 is arranged in the concave surface of the floating bushing positioning seat cavity, and the concave surface prevents the spacer bushing outer sealing piece 10 from being displaced.

The rest is the same as the first embodiment.

### Thirteenth embodiment

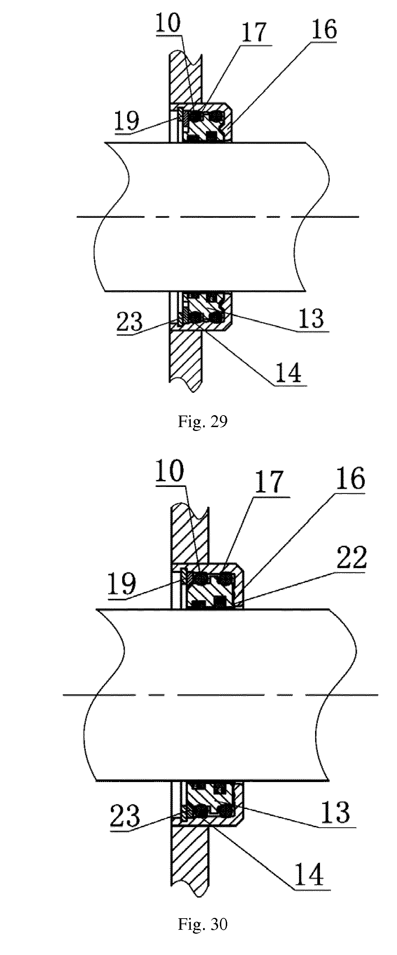

As shown in Fig.29, an end part of the sealing floating bushing 13 includes a floating adjustment surface and the like, the floating adjustment surface includes a plane, an arc surface, an inclined plane, a conical surface or a curved surface and the like, and when an outer sealing end of the sealing floating bushing 13 is provided with a floating bushing outer end plane 19, a floating bushing inner end curved surface is arranged at the inner sealing end of the sealing floating bushing.

The end close to the sealing floating bushing of the retainer ring 23 is provided with a plane, an arc surface, an inclined plane, a conical surface or a curved surface and the like, when the floating bushing inner end curved surface is close to the floating bushing shoulder 16, a retainer ring inner side plane 14 is arranged at the end close to the sealing floating bushing of the retainer ring 23, and the retainer ring inner side plane 14 is attached to the floating bushing outer end plane 19.

The end leaning against the sealing floating bushing of the floating bushing shoulder 16 includes a conical surface and the like, and can also include a plane, an arc surface, an inclined plane or a curved surface and the like.

An inner side wall of the floating bushing positioning seat cavity 17 includes a plane or a concave surface or a convex surface and the like, the spacer bushing outer sealing piece 10 is arranged in the concave surface of the floating bushing positioning seat cavity, and the concave surface prevents the spacer bushing outer sealing piece 10 from being displaced.

The rest is the same as the first embodiment.

### Fourteenth embodiment

As shown in Fig.30, an end part of the sealing floating bushing 13 includes a floating adjustment surface and the like, the floating adjustment surface includes a plane, an arc surface, an inclined plane, a conical surface or a curved surface and the like, and when an outer sealing end of the sealing floating bushing 13 is provided with a floating bushing outer end inclined plane, a floating bushing inner end plane 22 is arranged at the inner sealing end of the sealing floating bushing.

The end close to the sealing floating bushing of the retainer ring 23 is provided with a plane, an arc surface, an inclined plane, a conical surface or a curved surface and the like, when the floating bushing inner end plane 22 is close to the floating bushing shoulder 16, a retainer ring inner side inclined plane is arranged at the end close to the sealing floating bushing of the retainer ring 23, and the retainer ring inner side inclined plane is attached to the floating bushing outer end inclined plane.

The end leaning against the sealing floating bushing of the floating bushing shoulder 16 includes a curved surface and the like, and can also include a plane, an arc surface, an inclined plane or a conical surface and the like.

An inner side wall of the floating bushing positioning seat cavity 17 includes a plane or a concave surface or a convex surface and the like, the spacer bushing outer sealing piece 10 is arranged in the concave surface of the floating bushing positioning seat cavity, and the concave surface prevents the spacer bushing outer sealing piece 10 from being displaced.

The rest is the same as the first embodiment.

## Claims

1. A floating sealing method of a floating bushing sealing reciprocating impact apparatus, comprising:
a first step: arranging a sealing floating bushing, arranging a floating adjustment surface at the end part of the sealing floating bushing, forming the floating adjustment surface into a plane, an arc surface, an inclined plane, a conical surface or a curved surface, when forming an outer sealing end of the sealing floating bushing into a floating bushing outer end plane, arranging a floating bushing inner end arc surface at an inner sealing end of the sealing floating bushing, or when forming the outer sealing end of the sealing floating bushing into a floating bushing outer end arc surface, arranging a floating bushing inner end plane at the inner sealing end of the sealing floating bushing, or when forming the outer sealing end of the sealing floating bushing into a floating bushing outer end arc surface, arranging a floating bushing inner end arc surface at the inner sealing end of the sealing floating bushing, or when forming the outer sealing end of the sealing floating bushing into a floating bushing outer end plane, arranging a floating bushing inner end plane at the inner sealing end of the sealing floating bushing, or when forming the outer sealing end of the sealing floating bushing into a floating bushing outer end inclined plane, arranging a floating bushing inner end plane at the inner sealing end of the sealing floating bushing, or when forming the outer sealing end of the sealing floating bushing into a floating bushing outer end plane, arranging a floating bushing inner end conical surface at the inner sealing end of the sealing floating bushing, or when forming the outer sealing end of the sealing floating bushing into a floating bushing outer end plane, arranging a floating bushing inner end curved surface at the inner sealing end of the sealing floating bushing;
a second step: arranging a spacer bushing outer sealing piece and a spacer bushing inner sealing piece, arranging more than one spacer bushing outer sealing piece on the outer side of the sealing floating bushing, and arranging more than one spacer bushing inner sealing piece on the inner side of the sealing floating bushing;
a third step: arranging a floating bushing positioning seat outer port, a floating bushing positioning seat cavity and a floating bushing shoulder to form a floating bushing positioning seat, separately connecting or integrally arranging the floating bushing positioning seat outer port, the floating bushing positioning seat cavity and the floating bushing shoulder, and
arranging a sealing floating bushing locking piece hole slot at the floating bushing positioning seat outer port;
a fourth step: arranging a reciprocating impact box body, and arranging the floating bushing positioning seat on the reciprocating impact box body, wherein the floating bushing positioning seat and the reciprocating impact box body are separately connected or integrated;
a fifth step: arranging a impact guide piece and a guide rod connecting piece, arranging the guide rod connecting piece in the reciprocating impact box body, and separately connecting or integrating the guide rod connecting piece and the impact guide piece;
a sixth step: pushing the spacer bushing outer sealing piece, the spacer bushing inner sealing piece and the sealing floating bushing into the floating bushing positioning seat cavity from the floating bushing positioning seat outer port, snap-fitting the spacer bushing outer sealing piece between the outer side of the outer side of the sealing floating bushing and the floating bushing positioning seat by the sealing floating bushing, penetrating the impact guide piece through the spacer bushing inner sealing piece, arranging the spacer bushing inner sealing piece among the floating bushing shoulder, the sealing floating bushing and the impact guide piece and/or between the inner side of the sealing floating bushing and the impact guide piece;
a seventh step: arranging a floating bushing locking piece, arranging the floating bushing locking piece in the floating bushing locking piece hole slot, when the floating bushing outer end plane is attached to the floating bushing locking piece, leaning the floating bushing inner end arc surface against the floating bushing shoulder, or when the floating bushing outer end arc surface leans against the floating bushing locking piece, attaching the floating bushing inner end plane to the floating bushing shoulder, thus allowing the floating bushing shoulder to prevent the sealing floating bushing from dropping from one side of the floating bushing shoulder, and allowing the floating bushing locking piece to prevent the sealing floating bushing from dropping from the floating bushing positioning seat outer port;
an eighth step: arranging the impact head, arranging the impact head at one end or both ends of the impact guide piece, and separately connecting or integrating the impact head and the impact guide piece; and
a ninth step: arranging a power driving piece, and making the power driving piece drive the guide rod connecting piece to drive the impact guide piece to carry out reciprocating impact, wherein the impact head arranged at the end part of the impact guide piece impacts a coal wall or a stone wall or concrete or ore rock, due to the hardness of the coal wall or the stone wall or the concrete or the ore rock, the impact head generates a huge lateral force and/or reactive force, the huge lateral force and/or reactive force drives the impact guide piece to impact the spacer bushing inner sealing piece, the spacer bushing inner sealing piece drives the sealing floating bushing to float, the sealing floating bushing pushes and extrudes the floating bushing locking piece, the spacer bushing outer sealing piece and/or the floating bushing shoulder and floats, the floating bushing locking piece swings, the spacer bushing outer sealing piece deforms to absorb the lateral force and/or the reactive force, the sealing floating bushing, the spacer bushing inner sealing piece and the spacer bushing outer sealing piece float and seal in the floating bushing positioning seat to prevent the impact guide piece from damaging the spacer bushing inner sealing piece, the spacer bushing outer sealing piece and/or the sealing floating bushing, the spacer bushing outer sealing piece, the spacer bushing inner sealing piece, the floating bushing locking piece, the floating bushing inner end arc surface, the floating bushing outer end plane and the floating bushing shoulder cooperate to correct the sealing floating bushing, thus allowing the sealing floating bushing to be corrected while floating and sealing, and avoiding that the eccentric wear spacer bushing inner sealing piece cannot be adjusted after the floating sealing bushing tilts.

2. The floating sealing method of the floating bushing sealing reciprocating impact apparatus of claim 1, comprising:
a first step: forming the floating bushing locking piece into a snap spring or an elastic pin or a locking pin or a taper pin or an expansion pin or a retainer ring or a spacer bushing or a steel wire or a rope, and singly using or cooperatively using the snap spring, the elastic pin, the locking pin, the taper pin, the expansion pin, the retainer ring, the spacer bushing, the steel wire and the rope;
a second step: when the snap spring is singly used, directly attaching the snap spring to the sealing floating bushing, and when the snap spring is cooperatively used with the retainer ring, arranging the snap spring on one side of the retainer ring, and arranging the sealing floating bushing on the other side of the retainer ring;
a third step: arranging the floating bushing outer end arc surface for rotating relative to the floating bushing locking piece of the sealing floating bushing on the sealing floating bushing at the joint of the sealing floating bushing and the floating bushing locking piece, and/or
arranging the floating bushing inner end arc surface for rotating relative to the floating bushing shoulder of the sealing floating bushing on the sealing floating bushing at the joint of the sealing floating bushing and the floating bushing shoulder;
a fourth step: forming an end close to the sealing floating bushing of the retainer ring into a plane, an arc surface, an inclined plane, a conical surface or a curved surface, when the floating bushing inner end arc surface is close to the floating bushing shoulder, forming the end close to the sealing floating bushing of the retainer ring into a retainer ring inner side plane, and attaching the retainer ring inner side plane to the floating bushing outer end plane;
a fifth step: forming a joint of the outer side of the retainer ring and the floating bushing positioning seat into an retainer ring outer arc surface or an retainer ring outer cylindrical surface or a retainer ring outer plane; and
a sixth step: leaning the inner side plane retainer ring against the snap spring, wherein when the impact head generates the huge lateral force and/or reactive force to be applied to the impact guide piece, the impact guide piece impacts the spacer bushing inner sealing piece, the spacer bushing inner sealing piece drives the sealing floating bushing to float, the sealing floating bushing pushes and extrudes the retainer ring, the retainer ring outer arc surface rotates relative to the floating bushing positioning seat to push and extrude the snap spring, so as to drive the snap spring to swing, the sealing floating bushing pushes and extrudes the spacer bushing outer sealing piece, the spacer bushing outer sealing piece deforms to absorb the lateral force and/or the reactive force, the snap spring, the retainer ring, the spacer bushing outer sealing piece, the spacer bushing inner sealing piece, the floating bushing inner end arc surface, the floating bushing outer end plane cooperate with the floating bushing shoulder to correct the sealing floating bushing, thus allowing the sealing floating bushing to be corrected while floating and sealing, and avoiding that the eccentric wear spacer bushing inner sealing piece cannot be adjusted after the floating sealing bushing tilts.

3. A floating sealing reciprocating impact apparatus of a sealing floating bushing of a mining loader for implementing the floating sealing method of the floating bushing sealing reciprocating impact apparatus of claim 1, wherein the floating sealing reciprocating impact apparatus of the sealing floating bushing of the mining loader comprises a reciprocating impact box body, a reciprocating impact guide mechanism, a reciprocating impact actuating mechanism, a floating bushing floating sealing mechanism and an impact head, the floating bushing floating sealing mechanism comprises a floating bushing positioning seat, a sealing floating bushing, a spacer bushing outer sealing piece, a spacer bushing inner sealing piece and a floating bushing locking piece, the floating bushing positioning seat comprises a floating bushing positioning seat outer port, a floating bushing positioning seat cavity and a floating bushing shoulder, an end part of the sealing floating bushing comprises a floating adjustment surface, the floating adjustment surface comprises a plane, an arc surface, an inclined plane, a conical surface or a curved surface, when an outer sealing end of the sealing floating bushing is provided with a floating bushing outer end plane, a floating bushing inner end arc surface is arranged at an inner sealing end of the sealing floating bushing, or when the outer sealing end of the sealing floating bushing is provided with a floating bushing outer end arc surface, a floating bushing inner end plane is arranged at the inner sealing end of the sealing floating bushing, or when the outer sealing end of the sealing floating bushing is provided with a floating bushing outer end arc surface, a floating bushing inner end arc surface is arranged at the inner sealing end of the sealing floating bushing, or when the outer sealing end of the sealing floating bushing is provided with a floating bushing outer end plane, a floating bushing inner end plane is arranged at the inner sealing end of the sealing floating bushing, or when the outer sealing end of the sealing floating bushing is provided with a floating bushing outer end inclined plane, a floating bushing inner end plane is arranged at the inner sealing end of the sealing floating bushing, or when the outer sealing end of the sealing floating bushing is provided with a floating bushing outer end plane, a floating bushing inner end conical surface is arranged at the inner sealing end of the sealing floating bushing, or when the outer sealing end of the sealing floating bushing is provided with a floating bushing outer end plane, a floating bushing inner end curved surface is arranged at the inner sealing end of the sealing floating bushing, more than one spacer bushing outer sealing piece is arranged on the outer side of the sealing floating bushing, more than one spacer bushing inner sealing piece is arranged on the inner side of the sealing floating bushing, the floating bushing positioning seat outer port, the floating bushing positioning seat cavity and the floating bushing shoulder are separately connected or integrated, a sealing floating bushing locking piece hole slot is arranged at the floating bushing positioning seat outer port, the floating bushing positioning seat is arranged on the reciprocating impact box body, the floating bushing positioning seat and the reciprocating impact box body are separately connected or integrated, the reciprocating impact guide mechanism comprises an impact guide piece and a guide rod connecting piece, the guide rod connecting piece is arranged in the reciprocating impact box body, the guide rod connecting piece and the impact guide piece are separately connected or integrated, one end or both ends of the impact guide piece stretch out from the reciprocating impact box body, the sealing floating bushing, the spacer bushing outer sealing piece and the spacer bushing inner sealing piece are arranged in the floating bushing positioning seat cavity, the sealing floating bushing snap-fits the spacer bushing outer sealing piece between the outer side of the sealing floating bushing and the floating bushing positioning seat, the impact guide piece penetrates through the spacer bushing inner sealing piece, the spacer bushing inner sealing piece is arranged among the floating bushing shoulder, the sealing floating bushing and the impact guide piece and/or is arranged between the inner side of the sealing floating bushing and the impact guide piece, the floating bushing locking piece is arranged in the sealing floating bushing locking piece hole slot, when the floating bushing outer end plane is attached to the floating bushing locking piece, the floating bushing inner end arc surface leans against the floating bushing shoulder, or when the floating bushing outer end arc surface leans against the floating bushing locking piece, the floating bushing inner end plane is attached to the floating bushing shoulder, thus allowing the floating bushing shoulder to prevent the sealing floating bushing from dropping from one side of the floating bushing shoulder, and allowing the floating bushing locking piece to prevent the sealing floating bushing from dropping from the floating bushing positioning seat outer port, the impact head is arranged at one end or both ends of the impact guide piece, the impact head and the impact guide piece are separately connected or integrated, the reciprocating impact actuating mechanism comprises a power driving piece, the power driving piece drives the guide rod connecting piece to drive the impact guide piece to carry out reciprocating impact, the impact head at the end part of the impact guide piece impacts a coal wall or a stone wall or concrete or ore rock, a huge lateral force and/or reactive force is applied to the impact guide piece, the impact guide piece impacts the spacer bushing inner sealing piece, the spacer bushing inner sealing piece drives the sealing floating bushing to float, the sealing floating bushing pushes and extrudes the floating bushing locking piece, the spacer bushing outer sealing piece and/or the floating bushing shoulder and floats, the floating bushing locking piece swings, the spacer bushing outer sealing piece deforms to absorb the lateral force and/or the reactive force, the sealing floating bushing, the spacer bushing inner sealing piece and the spacer bushing outer sealing piece float and seal in the floating bushing positioning seat to prevent the impact guide piece from damaging the spacer bushing inner sealing piece, the spacer bushing outer sealing piece and/or the sealing floating bushing, the spacer bushing outer sealing piece, the spacer bushing inner sealing piece, the floating bushing locking piece, the floating bushing inner end arc surface, the floating bushing outer end plane and the floating bushing shoulder cooperate to correct the sealing floating bushing, thus allowing the sealing floating bushing to be corrected while floating and sealing, and avoiding that the eccentric wear spacer bushing inner sealing piece cannot be adjusted after the floating sealing bushing tilts, the spacer bushing outer sealing piece and the sealing floating bushing are separately combined or integrated, or the spacer bushing outer sealing piece and the floating bushing positioning seat are separately connected or integrated, the floating bushing locking piece and the floating bushing shoulder prevent the impact guide piece from dropping the sealing floating bushing, the spacer bushing outer sealing piece and the spacer bushing inner sealing piece from the floating bushing positioning seat in a reciprocating process.

4. The floating sealing reciprocating impact apparatus of the sealing floating bushing of the mining loader of claim 3, wherein the floating bushing locking piece comprises a snap spring or an elastic pin or a locking pin or a taper pin or an expansion pin or a retainer ring or a spacer bushing or a steel wire or a rope, the snap spring, the elastic pin, the locking pin, the taper pin, the expansion pin, the retainer ring, the spacer bushing, the steel wire and the rope are singly used or cooperatively used, when the snap spring is singly used, the snap spring is directly attached to the sealing floating bushing, and when the snap spring is cooperatively used with the retainer ring, the snap spring is arranged on one side of the retainer ring, the sealing floating bushing is arranged on the other side of the retainer ring, the floating bushing outer end arc surface for rotating relative to the floating bushing locking piece of the sealing floating bushing is arranged on the sealing floating bushing at the joint of the sealing floating bushing and the floating bushing locking piece, and/or the floating bushing inner end arc surface for rotating relative to the floating bushing shoulder of the sealing floating bushing is arranged on the sealing floating bushing at the joint of the sealing floating bushing and the floating bushing shoulder, an end close to the sealing floating bushing of the retainer ring is provided with a plane, an arc surface, an inclined plane, a conical surface or a curved surface, when the floating bushing inner end arc surface is close to the floating bushing shoulder, the end close to the sealing floating bushing of the retainer ring is provided with a retainer ring inner side plane, the retainer ring inner side plane is attached to the floating bushing outer end plane, a joint of the outer side of the retainer ring and the floating bushing positioning seat is formed into an retainer ring outer arc surface or an retainer ring outer cylindrical surface or a retainer ring outer plane, the outer side of the retainer ring leans against the snap spring, when the impact head generates the huge lateral force and/or reactive force to be applied to the impact guide piece, the impact guide piece impacts the spacer bushing inner sealing piece, the spacer bushing inner sealing piece drives the sealing floating bushing to float, the sealing floating bushing pushes and extrudes the retainer ring, the retainer ring outer arc surface rotates relative to the floating bushing positioning seat to push and extrude the snap spring, the snap spring swings, the sealing floating bushing pushes and extrudes the spacer bushing outer sealing piece, the spacer bushing outer sealing piece deforms to absorb the lateral force and/or the reactive force, the snap spring, the retainer ring, the spacer bushing outer sealing piece, the spacer bushing inner sealing piece, the floating bushing inner end arc surface, the floating bushing outer end plane and the floating bushing shoulder cooperate to correct the sealing floating bushing, thus allowing the sealing floating bushing to be corrected while floating and sealing, and avoiding that the eccentric wear spacer bushing inner sealing piece cannot be adjusted after the floating sealing bushing tilts.

5. The floating sealing reciprocating impact apparatus of the sealing floating bushing of the mining loader of claim 3, wherein the sealing floating bushing comprises an outer side groove of the sealing floating bushing and/or an outer side cylindrical surface of the sealing floating bushing, a spacer bushing inner sealing piece groove is formed on the inner side of the sealing floating bushing, the spacer bushing outer sealing piece is arranged in the outer side groove of the sealing floating bushing and/or the spacer bushing outer sealing piece is arranged on the outer side cylindrical surface of the sealing floating bushing, and the spacer bushing inner sealing piece is arranged in the spacer bushing inner sealing piece groove and/or the spacer bushing inner sealing piece is arranged between the sealing floating bushing and the floating bushing shoulder.

6. The floating sealing reciprocating impact apparatus of the sealing floating bushing of the mining loader of claim 3, wherein the sealing floating bushing further comprises a left sealing floating spacer bushing and a right sealing floating spacer bushing, the left sealing floating spacer bushing and the right sealing floating spacer bushing are separately connected or integrated, the spacer bushing inner sealing piece comprises a left spacer bushing inner sealing piece and/or a right spacer bushing inner sealing piece, the spacer bushing outer sealing piece comprises a left spacer bushing outer sealing piece and/or a right spacer bushing outer sealing piece, the left spacer bushing outer sealing piece is arranged on the outer side of the left sealing floating spacer bushing and/or the right spacer bushing outer sealing piece is arranged on the outer side of the right sealing floating spacer bushing, and the left spacer bushing inner sealing piece is arranged on the inner side of the left sealing floating spacer bushing and/or the right spacer bushing inner sealing piece is arranged on the inner side of the right sealing floating spacer bushing.

7. The floating sealing reciprocating impact apparatus of the sealing floating bushing of the mining loader of claim 3, wherein the sealing floating bushing comprises a lifting lug, a disassembly groove or a jackscrew structure, the lifting lug, the disassembly groove or a jackscrew hole is arranged in the sealing floating bushing, and the sealing floating bushing is taken out from the floating bushing positioning seat through the lifting lug, the disassembly groove or the jackscrew structure, the jackscrew structure comprises the jackscrew hole and a floating bushing jackscrew rod, when the spacer bushing inner sealing piece and the spacer bushing outer sealing piece are damaged and need to be changed, the floating bushing locking piece is taken out from the floating bushing positioning seat, the floating bushing jackscrew rod is arranged in the jackscrew hole, and the floating bushing jackscrew rod is rotated to take out the sealing floating bushing from the floating bushing positioning seat.

8. The floating sealing reciprocating impact apparatus of the sealing floating bushing of the mining loader of claim 7, wherein the jackscrew structure comprises a jackscrew hole, a floating bushing jackscrew rod, a jackscrew rod nut and a supporting nut piece, the supporting nut piece comprises a jackscrew rod hole, when the spacer bushing inner sealing piece and the spacer bushing outer sealing piece are damaged and need to be changed, the floating bushing jackscrew rod is screwed into the jackscrew hole by penetrating through the jackscrew rod hole, the jackscrew rod nut is arranged on the floating bushing jackscrew rod, the jackscrew rod nut is rotated to support the jackscrew rod nut by the supporting nut piece, and the floating bushing jackscrew rod and the sealing floating bushing are taken out from the floating bushing positioning seat by the jackscrew rod nut.

9. The floating sealing reciprocating impact apparatus of the sealing floating bushing of the mining loader of claim 3, wherein the spacer bushing outer sealing piece comprises an open spacer bushing outer sealing piece and/or the spacer bushing inner sealing piece comprises an open spacer bushing inner sealing piece, the open spacer bushing inner sealing piece comprises an open dustproof sealing piece and/or an open anti-leakage sealing piece, when the spacer bushing inner sealing piece and the spacer bushing outer sealing piece are damaged and need to be changed, the damaged spacer bushing inner sealing piece and spacer bushing outer sealing piece are changed by the open spacer bushing outer sealing piece and the open spacer bushing inner sealing piece, open ends of the open spacer bushing outer sealing piece and the open spacer bushing inner sealing piece are placed at the upper part of the sealing floating bushing, and the open end of the open spacer bushing outer sealing piece is fastened to, or fritted to, or bonded to or inserted into the open end of the open spacer bushing inner sealing piece.

10. The floating sealing reciprocating impact apparatus of the sealing floating bushing of the mining loader of claim 3, wherein the reciprocating impact box body comprises a power box, a guide box and a partition board, the impact guide piece is arranged in the guide box, the partition board is arranged between the power box and the guide box, the floating bushing positioning seat comprises a guide box floating bushing positioning seat and/or a power box floating bushing positioning seat, the sealing floating bushing comprises a guide box sealing floating bushing and/or a power box sealing floating bushing, the power box floating bushing positioning seat is arranged on the partition board, the power box sealing floating bushing is arranged in the power box floating bushing positioning seat, the impact guide piece further comprises a guide rod, a movement sealing plug or a movement sealing jacket is arranged on the guide rod connecting piece, the power box sealing floating bushing cooperates with the movement sealing plug or the movement sealing jacket for sealing and preventing liquid, materials, dust from entering the guide box from the power box, the guide box floating bushing positioning seat is arranged at the cooperation site of the guide rod and the guide box, the guide box sealing floating bushing is arranged in the guide box floating bushing positioning seat, the movement sealing plug or the movement sealing jacket comprises a sealing column, the sealing column cooperates with the power box sealing floating bushing for sealing, the movement sealing plug or the movement sealing jacket and the guide rod connecting piece are separately connected or integrated, the floating bushing locking piece prevents the sealing floating bushing from dropping from the partition board floating bushing positioning seat, and/or the floating bushing locking piece prevents the sealing floating bushing from dropping from the interior of the guide box floating bushing positioning seat.

11. The floating sealing reciprocating impact apparatus of the sealing floating bushing of the mining loader of claim 3, wherein the sealing floating bushing comprises a rubber sealing floating bushing, a metal sealing floating bushing or a plastic sealing floating bushing or a wood sealing floating bushing.

12. The floating sealing reciprocating impact apparatus of the sealing floating bushing of the mining loader of claim 3, wherein the floating bushing locking piece comprises a floating bushing protection retainer ring, and the floating bushing protection retainer ring comprises a rubber floating bushing retainer ring, a metal floating bushing protection retainer ring or a plastic floating bushing protection retainer ring or a wood floating bushing protection retainer ring.

13. The floating sealing reciprocating impact apparatus of the sealing floating bushing of the mining loader of claim 3, wherein the spacer bushing inner sealing piece comprises a dustproof spacer bushing inner sealing piece and/or an anti-leakage spacer bushing inner sealing piece, the dustproof spacer bushing inner sealing piece is arranged at a position close to the impact head on the sealing floating bushing, and the anti-leakage spacer bushing inner sealing piece is arranged at a position close to the guide rod connecting piece on the sealing floating bushing.

14. The floating sealing reciprocating impact apparatus of the sealing floating bushing of the mining loader of claim 4, wherein the snap spring comprises a hole elastic retainer ring or an outer arc surface snap spring, a hole elastic retainer ring groove is formed on the floating bushing positioning seat, the hole elastic retainer ring is placed in the hole elastic retainer ring groove, or an outer arc surface snap spring deformation groove is formed in the floating bushing positioning seat, an outer arc surface snap spring deformation groove matched with an outer arc surface snap spring groove of the floating bushing positioning seat is formed on the floating bushing protection retainer ring, the outer arc surface snap spring is arranged on the outer arc surface snap spring deformation groove, the sealing floating bushing is pushed into the floating bushing positioning seat, a hole wall of the floating bushing positioning seat compresses the outer arc surface snap spring into the outer arc surface snap spring deformation groove, when the outer arc surface snap spring is pushed to the position of the outer arc surface snap spring groove of the floating bushing positioning seat, the outer arc surface snap spring elastically stretches into the outer arc surface snap spring groove of the floating bushing positioning seat outwards, the floating bushing protection retainer ring is snap-fitted with the floating bushing positioning seat, the outer arc surface snap spring prevents the floating bushing protection retainer ring from dropping from the floating bushing positioning seat, during disassembly, the retainer ring is pried and pulled at a force larger than the deformation force of the outer arc surface snap spring, the floating bushing protection retainer ring moves outwards from the floating bushing positioning seat to push the outer arc surface snap spring into the outer arc surface snap spring deformation groove and pull out the floating bushing protection retainer ring from the floating bushing positioning seat, the height of the arc surface of the outer arc surface snap spring groove is smaller than the radius of the outer arc surface of the outer arc surface snap spring, and the radius of the arc surface of the outer arc surface snap spring groove is larger than or equal to the radius of the outer arc surface of the outer arc surface snap spring.

15. The floating sealing reciprocating impact apparatus of the sealing floating bushing of the mining loader of claim 3, wherein the end leaning against the sealing floating bushing of the floating bushing shoulder comprises a plane, an arc surface, an inclined plane, a conical surface or a curved surface.

16. The floating sealing reciprocating impact apparatus of the sealing floating bushing of the mining loader of claim 3, wherein an inner side wall of the floating bushing positioning seat cavity comprises a plane or a concave surface or a convex surface, the spacer bushing outer sealing piece is arranged in the concave surface of the floating bushing positioning seat cavity, and the concave surface prevents the spacer bushing outer sealing piece from being displaced.
